(19) 

Europäisches
Patentamt
European
Patent Office
Office européen
des brevets

(11) **EP 4 307 507 A1**

(12) **EUROPEAN PATENT APPLICATION**
published in accordance with Art. 153(4) EPC

(43) Date of publication:
**17.01.2024   Bulletin 2024/03**

(21) Application number: **22767187.2**

(22) Date of filing: **09.03.2022**

(51) International Patent Classification (IPC):
**H02H 7/18** (2006.01)          **H02J 7/00** (2006.01)
**H02J 7/02** (2016.01)

(52) Cooperative Patent Classification (CPC):
**H02H 7/18; H02J 7/00; H02J 7/02**

(86) International application number:
**PCT/JP2022/010257**

(87) International publication number:
**WO 2022/191233 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021   JP 2021038613**

(71) Applicant: **HONDA MOTOR CO., LTD.**
**Minato-ku**
**Tokyo 107-8556 (JP)**

(72) Inventors:
• **NAKAJIMA Atsushi**
  **Wako-shi, Saitama 351-0193 (JP)**

• **ODAKURA Satoshi**
  **Wako-shi, Saitama 351-0193 (JP)**
• **YAGI Keita**
  **Wako-shi, Saitama 351-0193 (JP)**
• **SHIIYAMA Takumi**
  **Wako-shi, Saitama 351-0193 (JP)**
• **UCHIMOTO Tatsuya**
  **Wako-shi, Saitama 351-0193 (JP)**
• **OGAWA Makoto**
  **Wako-shi, Saitama 351-0193 (JP)**
• **TAKEMASA Koichiro**
  **Wako-shi, Saitama 351-0193 (JP)**
• **MIYAZAKI Hiroshi**
  **Tokyo 102-0075 (JP)**

(74) Representative: **Weickmann & Weickmann
PartmbB
Postfach 860 820
81635 München (DE)**

(54) **ELECTRIC POWER DEVICE, AND CONTROL METHOD FOR SAME**

(57)     In an electric power device (10) and a method for controlling the same, a first circuit (84) is electrically connected to a first battery tray (40a) and a second battery tray (40b), a second circuit (86) is electrically connected to the first battery tray (40a), and a third circuit (88) is electrically connected to the second battery tray (40b). Between the first circuit (84) and the second circuit (86), a first resistor unit (90) is connected in series with the first battery tray (40a), and a first interrupting unit (94) is connected in parallel with the first resistor unit (90). Between the first circuit (84) and the third circuit (88), a second resistor unit (96) is connected in series with the second battery tray (40b), and a second interrupting unit (100) is connected in parallel with the second resistor unit (96)

FIG. 4

EP 4 307 507 A1

**EP 4 307 507 A1**

**Description**

TECHNICAL FIELD

The present invention relates to an electric power device and a control method thereof.

BACKGROUND ART

WO 2020/027202 A1 discloses a charging station that a battery can be attached to and detached from. The weight of the battery is a weight that can be carried by a person. The size of the battery is a size that can be carried by a person. The battery is attached in a slot of the charging station. When the battery is attached in the slot, the charging station can supply power to power equipment of a customer.

SUMMARY OF THE INVENTION

In WO 2020/027202 A1, the charging station is provided with a plurality of slots. Each of the plurality of slots can have a battery (power storage device) attached thereto and detached therefrom. The plurality of batteries attached in the plurality of slots are connected to each other. The charging station, in a state where the plurality of batteries are connected to each other, takes power from the plurality of batteries and supplies power to external power equipment. Alternatively, the power station charges the plurality of batteries.

However, in WO 2020/027202 A1, there is no idea of detaching and attaching batteries from and to a given slot while power is being transferred to and from the plurality of batteries. Therefore, when a battery is removed from a slot, the remaining batteries enter an electrically disconnected state. When the remaining batteries are electrically disconnected, it becomes difficult to transfer power to and from the remaining batteries.

Furthermore, in a case where a battery is attached in each of the plurality of slots, when the SOC (State Of Charge) or the voltage differs among the plurality of batteries, there is a possibility of overcurrent flowing from batteries with a high SOC or voltage to batteries with a low SOC or voltage. In this case, if a DC/DC converter is used, it is possible to even out the output voltages of the plurality of batteries. Therefore, it is possible to restrict the occurrence of overcurrent. However, using a DC/DC converter incurs a higher cost.

In light of the above problems, there is a desire to be able to continue the transfer of power even when an arbitrary power storage device is attached or detached while power is being transferred to or from the plurality of power storage devices. Furthermore, there is a desire to restrict the occurrence of overcurrent when attaching a power storage device. Yet further, there is a desire for a configuration that is both simple and low cost.

The present invention has been devised in order to solve this type of problem.

A first aspect of the present invention is an electric power device comprising a plurality of attachment portions to which a plurality of power storage devices can be attached, wherein among the plurality of attachment portions, a first attachment potion and a second attachment portion are arranged to be connected in series, and the electric power device comprises: a first circuit electrically connected to the first attachment portion and the second attachment portion; a second circuit electrically connected to a side of the first attachment portion opposite the first circuit; a third circuit electrically connected to a side of the second attachment portion opposite the first circuit; a first resistance portion connected in series to the first attachment portion, between the first circuit and the second circuit; a first interruption portion connected in parallel to the first resistance portion; a second resistance portion connected in series to the second attachment portion, between the first circuit and the third circuit; and a second interruption portion connected in parallel to the second resistance portion.

A second aspect of the present invention is a control method of an electric power device including a plurality of attachment portions to which a plurality of power storage devices can be attached, comprising: in a case where, among the plurality of attachment portions, a first attachment potion and a second attachment portion are arranged to be connected in series, the first attachment portion and the second attachment portion are electrically connected to a first circuit, a second circuit is electrically connected to a side of the first attachment portion opposite the first circuit, a third circuit is electrically connected to a side of the second attachment portion opposite the first circuit, a first resistance portion is connected in series to the first attachment portion between the first circuit and the second circuit, a first interruption portion is connected in parallel to the first resistance portion, a second resistance portion is connected in series to the second attachment portion between the first circuit and the third circuit, and a second interruption portion is connected in parallel to the second resistance portion: a step of setting the first interrupt portion to a cutoff state; a step of attaching the power storage device to the first attachment portion; a step of estimating an estimated current, which is a current expected to flow to the power storage device when it is assumed that the first interruption portion is in a connected state; and a step of controlling the first interruption portion based on the estimated current that has been estimated.

In the present invention, the first attachment portion, the first resistance portion, and the first interruption portion are provided between the first circuit and the second circuit. The second attachment portion, the second resistance portion, and the second interruption portion are provided between the first circuit and the third circuit. Due to this, even when a power storage device is attached to or detached from one of the attachment portions, a power storage device attached to the other attachment portion does not enter an electrically insulated state inside the electric power device. As a result, it is possible to continue exchanging power with respect to the plurality of power storage devices with a simple and low-cost configuration.

Furthermore, when a power storage device is attached to the first attachment portion while the first interruption portion is in the cutoff state, this power storage device is connected in series to the first resistance portion. Due to this, the occurrence of overcurrent when the power storage device is attached can be restricted. Furthermore, compared to a case where a DC/DC converter is used, the occurrence of overcurrent can be restricted with a simple and low-cost configuration.

BRIEF DESCRIPTION OF DRAWINGS

FIG. 1 is a perspective view of an electric power device according to the present embodiment;
FIG. 2 is a schematic diagram for describing a usage example of the electric power device of FIG. 1;
FIG. 3 is an enlarged frontal view of the operation panel of FIG. 1;
FIG. 4 is a circuit configuration diagram of the electric power device of FIG. 1;
FIG. 5 is a circuit configuration diagram of the mobile battery and battery relay of FIG. 4;
FIG. 6 is a circuit configuration diagram in which the circuit connection between the first mobile battery and the third mobile battery is simplified;
FIG. 7A is a circuit configuration diagram in which the circuit connection between the first mobile battery whose first interruption portion is in the OFF state, the third mobile battery, and the inverter is simplified;
FIG. 7B is a circuit configuration diagram in which the circuit connection between the first mobile battery whose first interruption portion is in the ON state, the third mobile battery, and the inverter is simplified;
FIG. 8A is a circuit configuration diagram in which the circuit connection between the first mobile battery whose switch is OFF and the third mobile battery is simplified;
FIG. 8B is a circuit configuration diagram in which the circuit connection between the first mobile battery whose switch is ON and the third mobile battery is simplified;
FIG. 9 is a flow chart of the operation of the electric power device when a mobile battery is attached to a battery tray;
FIG. 10 is a flow chart of the operation of the electric power device when a battery tray is unlocked;
FIG. 11 is a circuit configuration diagram of a first modification;
FIG. 12 is a circuit configuration diagram of a second modification; and
FIG. 13 is a circuit configuration diagram of a third modification.

DETAILED DESCRIPTION OF THE INVENTION

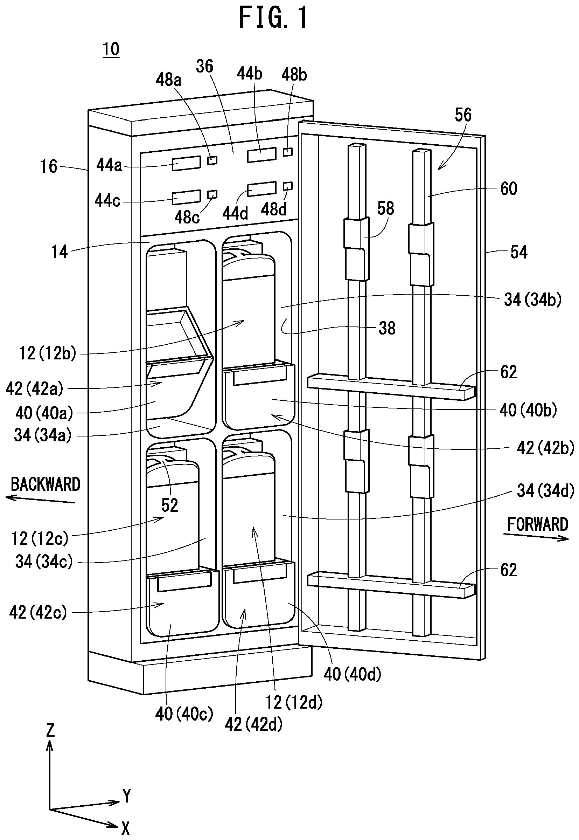

As shown in FIG. 1, an electric power device 10 according to the present embodiment stores a plurality of mobile batteries 12 therein. The electric power device 10 charges and discharges each of the mobile batteries 12. The electric power device 10 is a stationary battery power source device. Each of the plurality of mobile batteries 12 can be attached to and detached from the electric power device 10. Each of the plurality of mobile batteries 12 is a power storage device that can be charged and discharged. An attachable battery pack of lithium-ion batteries is suitable as a mobile battery 12.

In the description of FIG. 1, a depth direction of the electric power device 10 is the X-axis direction. The positive X-axis direction is a direction from the back surface 16 toward the front surface 14 of the electric power device 10. A width direction of the electric power device 10 is the Y-axis direction. The positive Y-axis direction is a direction toward the right side, when the electric power device 10 is viewed from a position facing the front surface 14. The up-down direction of the electric power device 10 is the Z-axis direction. The positive Z-axis direction is a direction toward the top. There may be cases where a direction from the back surface 16 toward the front surface 14 of the electric power device 10 is referred to as "forward" and a direction from the front surface 14 toward the back surface 16 is referred to as "backward".

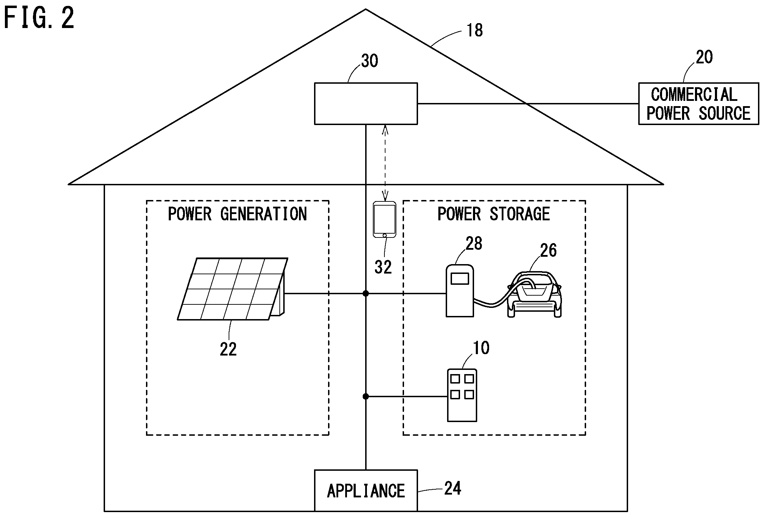

As shown in FIG. 2, the electric power device 10 is installed in a residence 18, for example. The electric power device 10 charges a mobile battery 12 (see FIG. 1) with power supplied from a commercial power source 20 (external power source) or power supplied from a photovoltaic device 22 (external power source). Furthermore, the electric power device 10 supplies power stored in the mobile battery 12 to a home appliance 24 (other power device) inside the residence 18.

In the residence 18, a vehicle 26 (other power device) can be used as a power source device, in addition to the electric power device 10. The vehicle 26 includes a drive source battery (not shown). The vehicle 26 is a hybrid vehicle or an electric vehicle. The vehicle 26 is connected to a vehicle power source manager 28 installed in the residence 18. Due to this, the vehicle 26 and the vehicle power source manager 28 function as power devices. The vehicle power source manager 28 charges the drive source battery of the vehicle 26 with power supplied from the commercial power source 20 or power supplied from the photovoltaic device 22. The vehicle power source manager 28 supplies the home appliance 24 inside the residence 18 with power stored in the drive source battery.

An integrated power manager 30 is installed in the residence 18, as an HEMS (Home Energy Management System). The integrated power manager 30 manages the power generation amount of the photovoltaic device 22, the power storage amount of the mobile battery 12 of the electric power device 10, and the power storage amount of the drive source battery of the vehicle 26. The integrated power manager 30 controls the amount of power supplied to the residence 18 from the commercial power source 20. The integrated power manager 30 controls the amount of power supplied to the commercial power source 20 from the residence 18. The power system leading to the electric power device 10 from the commercial power source 20, photovoltaic device 22, or vehicle power source manager 28 is an AC power system.

The integrated power manager 30 can transmit and receive signals or information to and from a portable device 32, via wireless communication. The portable device 32 is a smartphone, tablet, or the like possessed by a user. The portable device 32 can display various types of information received from the integrated power manager 30, in a display. Specifically, the portable device 32 can display the amount of power supplied to the residence 18 from the commercial power source 20 or the amount of power supplied to the commercial power source 20 from the residence 18, in the display. The user can provide their desired instructions to the integrated power manager 30 by checking the display content in the display and operating the portable device 32.

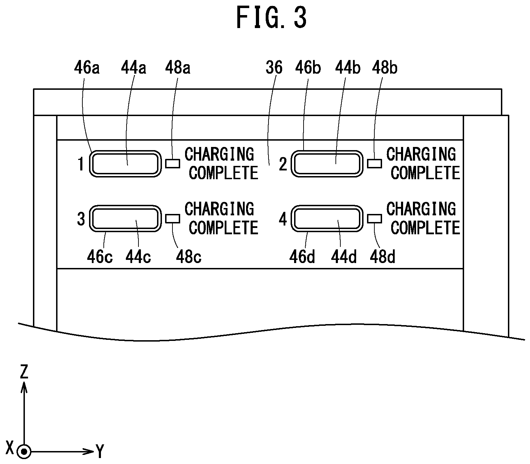

As shown in FIGS. 1 and 3, the electric power device 10 includes four slots 34 and one operation panel 36. One mobile battery 12 is set in each of the four slots 34. Openings 38 are formed in the front surface 14 of the electric power device 10, at positions corresponding to each of the slots 34. For each of the four slots 34, a mobile battery 12 is inserted and removed via the opening 38. A battery holder 42 is installed inside each of the four slots 34. The battery holder 42 includes a battery tray 40 (attachment portion).

The electric power device 10 should include at least four slots 34. Accordingly, the electric power device 10 can have at least four mobile batteries 12 attached to four battery trays 40. In the following description, the slot 34 on the top left, when the front surface 14 of the electric power device 10 is viewed from the front, is referred to as the first slot 34a. The slot 34 on the top right is referred to as the second slot 34b. The slot 34 on the bottom left is referred to as the third slot 34c. The slot 34 on the bottom right is referred to as the fourth slot 34d. Accordingly, the first slot 34a and second slot 34b are installed at higher positions than the third slot 34c and fourth slot 34d.

More specifically, a battery holder 42 having a battery tray 40 is installed in each of the first slot 34a to fourth slot 34d. In the following description, the battery trays 40 installed in the first slot 34a to fourth slot 34d may be referred to respectively as the first battery tray 40a to fourth battery tray 40d (first attachment portion to fourth attachment portion). Furthermore, the battery holders 42 of the first slot 34a to fourth slot 34d may be referred to respectively as the first battery holder 42a to fourth battery holder 42d.

A mobile battery 12 is attached to each of the first battery tray 40a to fourth battery tray 40d. In the following description, the mobile batteries 12 attached to the first battery tray 40a to fourth battery tray 40d may be referred to respectively as a first mobile battery 12a to fourth mobile battery 12d (first power storage device to fourth power storage device) .

Accordingly, the first battery tray 40a and second battery tray 40b are installed at higher positions than the third battery tray 40c and fourth battery tray 40d.

In the electric power device 10, the first mobile battery 12a can be attached to and detached from the first battery tray 40a. Furthermore, in the electric power device 10, the second mobile battery 12b can be attached to and detached from the second battery tray 40b. The user can exchange any of the mobile batteries among the first mobile battery 12a and the second mobile battery 12b. Specifically, the user can exchange a mobile battery whose deterioration degree has become high, due to repeated charging and discharging, with a mobile battery whose deterioration degree is low. The deterioration degree is the SOH (State Of Health), for example.

The third mobile battery 12c attached to the third battery tray 40c is a power storage device that has been fixed to the third battery tray 40c (made stationary). The fourth mobile battery 12d attached to the fourth battery tray 40d is a power storage device that has been fixed to the fourth battery tray 40d (made stationary). The stationary third mobile battery 12c and fourth mobile battery 12d may be always fixed to the third battery tray 40c and fourth battery tray 40d. Alternatively, the third mobile battery 12c and fourth mobile battery 12d may be power storage devices whose attachment and detachment frequencies are less than those of the first mobile battery 12a and second mobile battery 12b. In this case, the third mobile battery 12c and fourth mobile battery 12d can be attached or detached when their lifetime has expired, for example.

In this way, in the present embodiment, at least two mobile batteries 12 (first mobile battery 12a and second mobile battery 12b) that are attachable to and detachable from the electric power device 10 can be stored in the electric power device 10. Furthermore, in the present embodiment, at least two mobile batteries 12 (the third mobile battery 12c and the fourth mobile battery 12d) that are fixed to the electric power device 10 can be stored in the electric power device 10. Therefore, in the present embodiment, the electric power device 10 can store 32 mobile batteries 12, for example. In such a case, two mobile batteries 12 are fixed to the electric power device 10. Furthermore, 30 mobile batteries 12 are attachable to and detachable from the electric power device 10. That is, in the present embodiment, two or more mobile batteries 12 should be attachable to and detachable from the electric power device 10.

The operation panel 36 is arranged on the front surface 14 of the electric power device 10, above the first slot 34a to fourth slot 34d. As shown in FIG. 3, the operation panel 36 is provided with a first unlock button 44a to fourth unlock button 44d (instructing sections), a first unlock notification section 46a to fourth unlock notification section 46d (notifying sections), and a first charging completion notification section 48a to fourth charging completion notification section 48d.

The first unlock button 44a to fourth unlock button 44d correspond to the first slot 34a to fourth slot 34d shown in FIG. 1 (first battery tray 40a to fourth battery tray 40d). As shown in FIG. 3, the first unlock notification section 46a to fourth unlock notification section 46d are arranged to surround the first unlock button 44a to fourth unlock button 44d. The first charging completion notification section 48a to fourth charging completion notification section 48d are arranged to the right side of the first unlock button 44a to fourth unlock button 44d.

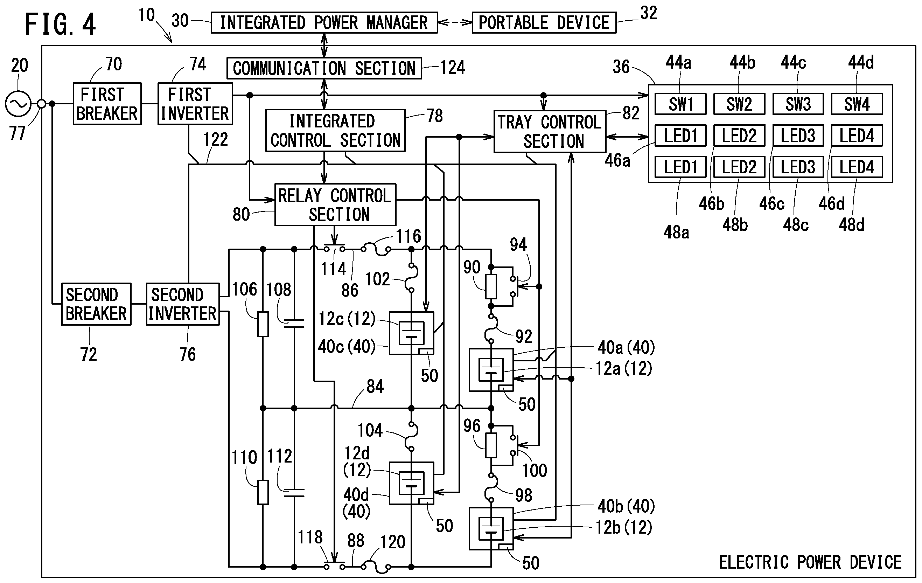

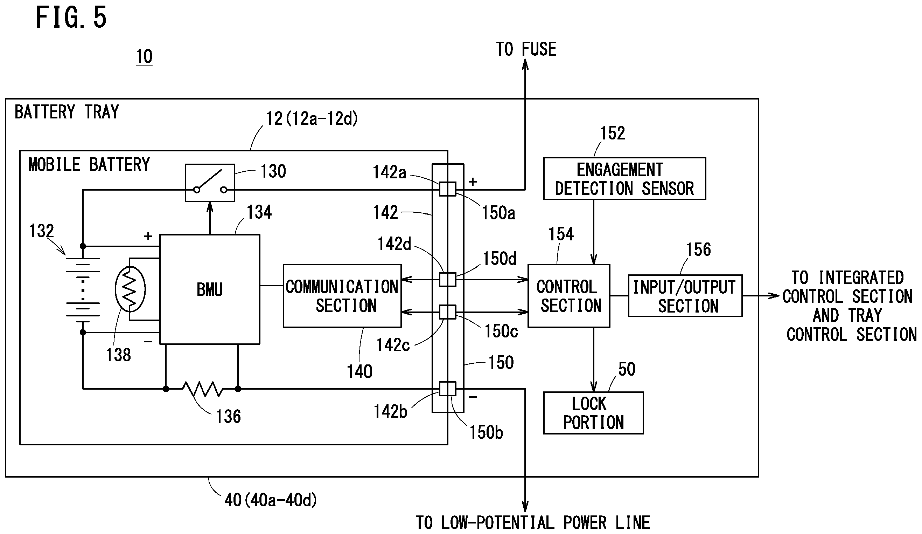

The first battery holder 42a to fourth battery holder 42d are each provided with a lock portion 50 (restraining portion) (see FIGS. 4 and 5). Usually, the lock portions 50 respectively put the first battery tray 40a to fourth battery tray 40d in a locked state (restrained state) when the first battery tray 40a to fourth battery tray 40d are oriented upward. In the locked state, the first mobile battery 12a to fourth mobile battery 12d cannot be removed from the first battery holder 42a to fourth battery holder 42d.

The first unlock notification section 46a to fourth unlock notification section 46d are LED lamps. When the user operates (presses) any of the unlock buttons 44a to 44d, the unlock notification sections 46a to 46d surrounding the operated unlock button 44a to 44d light up. The lock portions 50 corresponding to the operated unlock button 44a to 44d unlock the battery trays 40. The mobile battery 12 placed in the battery tray 40 that has been unlocked tilts slowly forward along with this battery tray 40. The user grips a handle 52 at the top portion of the mobile battery 12 and pulls the mobile battery 12 out from the battery tray 40. In this way, the user removes the mobile battery 12 from the electric power device 10.

After the mobile battery 12 has been removed, the battery tray 40 rotates backward to be oriented upward. Accordingly, when a certain time (prescribed time) has passed from the unlocking, the lock portion 50 causes the battery tray 40 to be in the locked state again. Due to this, the unlock notification section 46a to 46d no longer lights up.

When the user places a mobile battery 12 on the battery tray 40 that has been unlocked, the mobile battery 12 and the battery tray 40 rotate backward. Due to this, the lock portion 50 puts the battery tray 40 in the locked state. In this case as well, the unlock notification section 46a to 46d no longer lights up.

In the manner described above, the third mobile battery 12c is fixed to the third battery tray 40c. Furthermore, the fourth mobile battery 12d is fixed to the fourth battery tray 40d. Therefore, the third battery tray 40c and fourth battery tray 40d are always in the locked state. Accordingly, even when the third unlock button 44c or fourth unlock button 44d is operated, the user operation is invalid.

The first charging completion notification section 48a to fourth charging completion notification section 48d are LED lamps. The first charging completion notification section 48a to fourth charging completion notification section 48d light up when the respective first mobile battery 12a to fourth mobile battery 12d are fully charged.

As shown in FIG. 1, a door portion 54 is provided on the front surface 14 of the electric power device 10. A reinforcement rib 56 and four battery guides 58 are provided on the rear surface (back surface) of the door portion 54. The reinforcement rib 56 includes two up-down-direction ribs 60 and two lateral-direction ribs 62. The two up-down-direction ribs 60 are separated by a constant interval and provided on the rear surface of the door portion 54. Each of the two up-down-direction ribs 60 extends in the up-down-direction direction (Z-axis direction). The two lateral-direction ribs 62 are separated by a constant interval and provided on the rear surface of the door portion 54. Each of the two lateral-direction ribs 62 extends in a direction orthogonal to the up-down-direction ribs 60. By providing the reinforcement ribs 56, it is possible to make the door portion 54 lighter. By providing the reinforcement ribs 56, the mechanical strength of the door portion 54 is ensured.

The four battery guides 58 are provided overlapping with the two up-down-direction ribs 60. The four battery guides 58 are provided to the two up-down-direction ribs 60 in a manner to respectively face the first slot 34a to fourth slot 34d. Specifically, the four battery guides 58 are provided to the two up-down-direction ribs 60 in a manner to face the first mobile battery 12a to fourth mobile battery 12d set in the first slot 34a to fourth slot 34d. The four battery guides 58 are provided on the two up-down-direction ribs 60 at positions corresponding to the top portions of the first mobile battery 12a to fourth mobile battery 12d. Each battery guide 58 is formed to extend backward from the door portion 54 in a state where the door portion 54 is closed.

Each of the four battery guides 58 prevents the mobile battery 12 from falling forward while the mobile battery 12 is stored in the slot 34. Due to this, it is possible to prevent the mobile battery 12 from detaching from the battery tray 40. Furthermore, when a vibration acts on the electric power device 10, it is possible to restrict movement of the mobile battery 12 within the electric power device 10 and the like. Yet further, in a state where the mobile battery 12 has detached from the battery tray 40, the mobile battery 12 and the battery guide 58 interfere with each other when the door portion 54 is closed. In such a case, the door portion 54 is not completely closed, and it is possible for the user to recognize that a mobile battery 12 has detached from the battery tray 40.

The electric power device 10 is not limited to being used in the residence 18, and can be applied to various power source systems that supply power to a load or the like from the plurality of mobile batteries 12 or charge the plurality of mobile batteries 12. The electric power device 10 is not limited to being used in the residence 18, and can be installed in an office, a public facility, or the like.

The electric power device 10 can be applied to power source systems of various types of moving bodies. The various types of moving bodies including moving bodies that can be ridden by people and moving bodies that cannot be ridden by people. Examples of such moving bodies include vehicles, aircraft, flying bodies, ships, and the like. Examples of a power source system of a vehicle include a power source system of an electric vehicle and a power source system of a vehicle having a drive motor, such as a hybrid vehicle. That is, the electric power device 10 can be applied to the power systems of various types of vehicles such as one-wheel vehicles, two-wheel vehicles, and four-wheel vehicles.

The electric power device 10 can be applied to the power source system of various types of general-purpose equipment not ridden by people. Such general-purpose equipment includes, for example, (1) a charger, (2) a discharger, (3) work machines such as general-purpose work machines, lawn mowers, cultivators, and blowers, (4) electric equipment without a motor, such as floodlights and lighting equipment, and (5) equipment installed in houses or buildings.

Examples of (5) above include (A) equipment that operates on DC power, such as clocks and audio equipment such as radio cassette recorders, (B) equipment that operates on AC power such as fans, juicers, blenders, incandescent lamps, and the like, (C) equipment that operates on DC power converted from AC power, such as televisions, radios, stereos, and personal computers, and (D) inverter-type devices including washing machines, refrigerators, air conditioners, microwave ovens, and fluorescent lamps. The devices of (D) above include devices that operate on AC power converted from DC power obtained previously from converting AC power to this DC power.

The circuit structure of the electric power device 10 formed in the manner described above will be described while referencing FIGS. 4 and 5. In the description of the circuit configuration, FIGS. 1 to 3 will also be referenced as necessary.

The electric power device 10 includes two breakers 70 and 72 and two inverters 74 and 76 (power converter devices). The electric power device 10 is electrically connected to an AC power system such as the commercial power source 20 (see FIG. 2), via a connection portion 77 such as an AC outlet. In the electric power device 10, the line from the connection portion 77 branches into two lines. Among the two branched lines, one line is electrically connected to the first inverter 74 via the first breaker 70. Among the two branched lines, the other line is electrically connected to the second inverter 76 via the second breaker 72. That is, a serial circuit including the first breaker 70 and the first inverter 74 and a serial circuit including the second breaker 72 and the second inverter 76 are electrically connected in parallel with respect to the connection portion 77. The first inverter 74 converts the AC voltage from the commercial power source 20 into a relatively low DC voltage (power source voltage for driving the control circuit). The second inverter 76 converts the AC voltage from the commercial power source 20 into a relatively high DC voltage (high DC voltage for charging). Alternatively, the second inverter 76 converts a high DC voltage (high DC voltage for discharge) into an AC voltage.

The electric power device 10 further includes, in addition to the operation panel 36, an integrated control section 78 (estimating section and control section), a relay control section 80, and a tray control section 82. The low DC voltage resulting from the conversion by the first inverter 74 is supplied to the integrated control section 78, the relay control section 80, the tray control section 82, and the operation panel 36. That is, the low DC voltage is the power source voltage for driving the integrated control section 78, the relay control section 80, the tray control section 82, and the operation panel 36. The integrated control section 78, the relay control section 80, the tray control section 82, and the operation panel 36 are a control system for the first mobile battery 12a to fourth mobile battery 12d, first battery tray 40a to fourth battery tray 40d, and the like.

The electric power device 10 further includes a first circuit 84 to third circuit 88. The first circuit 84 to third circuit 88 are electrically connectable to the first mobile battery 12a to fourth mobile battery 12d, which are attached to the first battery tray 40a to fourth battery tray 40d. Among these circuits, the second circuit 86 is a high-potential line connected to the positive terminal of the output side (secondary side) of the second inverter 76. The third circuit 88 is a low-potential (e.g., a ground potential) line connected to the negative terminal of the output side of the second inverter 76. The first circuit 84 is a line for generating an intermediate potential (neutral point potential) between the second circuit 86 and the third circuit 88.

The high DC voltage generated on the output side of the second inverter 76 is a charge voltage to be supplied from the second inverter 76 to the first mobile battery 12a to fourth mobile battery 12d, via the first circuit 84 to third circuit 88. Alternatively, the high DC voltage generated on the output side of the second inverter 76 is a discharge voltage to be output from the first mobile battery 12a to fourth mobile battery 12d to the second inverter 76, via the first circuit 84 to third circuit 88.

Here, the circuit configuration of the inside of the electric power device 10 will be described in detail.

The first battery tray 40a and the second battery tray 40b are arranged to be electrically connected in series. The first battery tray 40a and second battery tray 40b are electrically connected to the first circuit 84. The first circuit 84 is arranged between the first battery tray 40a and the second battery tray 40b, as shown in FIG. 4. One end portion of the first battery tray 40a faces the first circuit 84 (second battery tray 40b). The one end portion of the first battery tray 40a is electrically connected to the negative electrode of the first mobile battery 12a, when the first mobile battery 12a is attached. One end portion of the second battery tray 40b faces the first circuit 84 (first battery tray 40a). The one end portion of the second battery tray 40b is electrically connected to the positive electrode of the second mobile battery 12b, when the second mobile battery 12b is attached.

As shown in FIG. 4, the second circuit 86 is electrically connected to the side of the first battery tray 40a opposite the side connected to the first circuit 84. The second circuit 86 is electrically connected to the positive terminal of the output side of the second inverter 76. The second circuit 86 is electrically connected to the other end portion of the first battery tray 40a. As shown in FIG. 4, the other end portion of the first battery tray 40a is the side of the first battery tray 40a opposite the first circuit 84 (the side away from the second battery tray 40b). The other end portion of the first battery tray 40a is electrically connected to the positive electrode of the first mobile battery 12a, when the first mobile battery 12a is attached.

As shown in FIG. 4, the third circuit 88 is electrically connected to the side of the second battery tray 40b opposite the side connected to the first circuit 84. The third circuit 88 is electrically connected to the negative terminal of the output side of the second inverter 76. The third circuit 88 is electrically connected to the other end portion of the second battery tray 40b. As shown in FIG. 4, the other end portion of the second battery tray 40b is the side of the second battery tray 40b opposite the first circuit 84 (the side away from the first battery tray 40a). The other end portion of the second battery tray 40b is electrically connected to the negative electrode of the second mobile battery 12b, when the second mobile battery 12b is attached.

A first resistance portion 90 and a fuse 92 are electrically connected in series to the first battery tray 40a, between the first circuit 84 and the second circuit 86. A first interruption portion 94, which is a relay, is electrically connected in parallel to the first resistance portion 90. It is sufficient for the first battery tray 40a, the parallel circuit made up of the first resistance portion 90 and the first interruption portion 94, and the fuse 92 to be electrically connected in parallel. Therefore, the configuration is not limited to the example of FIG. 4, and the first battery tray 40a may be connected to the second circuit 86. Furthermore, the parallel circuit made up of the first resistance portion 90 and the first interruption portion 94 may be connected to the first circuit 84.

A second resistance portion 96 and a fuse 98 are electrically connected in series to the second battery tray 40b, between the first circuit 84 and the third circuit 88. A second interruption portion 100, which is a relay, is electrically connected in parallel to the second resistance portion 96. It is sufficient for the second battery tray 40b, the parallel circuit made up of the second resistance portion 96 and the second interruption portion 100, and the fuse 98 to be electrically connected in parallel. Therefore, the configuration is not limited to the example of FIG. 4, and the second battery tray 40b may be connected to the third circuit 88. Furthermore, the parallel circuit made up of the second resistance portion 96 and the second interruption portion 100 may be connected to the first circuit 84.

A serial circuit made up of the third battery tray 40c and the fuse 102 is electrically connected between the first circuit 84 and the second circuit 86. This serial circuit is electrically connected in parallel to the first battery tray 40a, the fuse 92, and the parallel circuit made up of the first resistance portion 90 and the first interruption portion 94. In this case, one end portion of the third battery tray 40c (negative electrode of the third mobile battery 12c) is electrically connected to the first circuit 84. The other end portion of the third battery tray 40c (positive electrode of the third mobile battery 12c) is electrically connected to the second circuit 86, via the fuse 102.

A serial circuit made up of the fourth battery tray 40d and a fuse 104 is electrically connected between the first circuit 84 and the third circuit 88. This serial circuit is electrically connected in parallel to the second battery tray 40b, the fuse 98, and the parallel circuit made up of the second resistance portion 96 and the second interruption portion 100. In this case, one end portion of the fourth battery tray 40d (positive electrode of the fourth mobile battery 12d) is electrically connected to the first circuit 84, via the fuse 104. The other end portion of the fourth battery tray 40d (negative electrode of the fourth mobile battery 12d) is electrically connected to the third circuit 88.

Furthermore, a parallel circuit made up of a first voltage-dividing resistor 106 and a first voltage-dividing capacitor 108 is electrically connected between the first circuit 84 and the second circuit 86. Yet further, a parallel circuit made up of a second voltage-dividing resistor 110 and a second voltage-dividing capacitor 112 is electrically connected between the first circuit 84 and the third circuit 88.

A relay 114 and a fuse 116 are electrically connected in series in the second circuit 86. The relay 114 and the fuse 116 are connected between the third battery tray 40c and the first voltage-dividing resistor 106 and first voltage-dividing capacitor 108, in the second circuit 86. Furthermore, a relay 118 and a fuse 120 are electrically connected in series in the third circuit 88. The second voltage-dividing capacitor 118 and the fuse 120 are arranged between the fourth battery tray 40d and the second voltage-dividing resistor 110 and second voltage-dividing capacitor 112, in the third circuit 88.

Accordingly, as shown in FIG. 4, the second inverter 76 can charge the first mobile battery 12a to fourth mobile battery 12d attached to the first battery tray 40a to fourth battery tray 40d, via the first circuit 84 to third circuit 88. The second inverter 76 is capable of extracting DC power from the first mobile battery 12a to fourth mobile battery 12d attached to the first battery tray 40a to fourth battery tray 40d, via the first circuit 84 to third circuit 88.

The first circuit 84 functions as wiring generating a DC voltage having an intermediate potential with respect to the high-potential DC voltage at the second circuit 86 and the low-potential DC voltage at the third circuit 88. In this case, the first voltage-dividing resistor 106 and the first voltage-dividing capacitor 108 are provided between the first circuit 84 and the second circuit 86. Furthermore, the second voltage-dividing resistor 110 and the second voltage-dividing capacitor 112 are provided between the first circuit 84 and the third circuit 88. Due to this, a DC voltage of the intermediate potential is generated at the first circuit 84. As a result, the voltage of the output side of the second inverter 76 is divided, and therefore it is possible to restrict the occurrence of overvoltage.

Accordingly, the first mobile battery 12a and the third mobile battery 12c are charged with the DC voltage of the potential difference between the first circuit 84 and the second circuit 86. Furthermore, the first mobile battery 12a and the third mobile battery 12c discharge with the DC voltage of the potential difference between the first circuit 84 and the second circuit 86.

The second mobile battery 12b and the fourth mobile battery 12d are charged with the DC voltage of the potential difference between the first circuit 84 and the third circuit 88. Furthermore, the second mobile battery 12b and the fourth mobile battery 12d discharge with the DC voltage of the potential difference between the first circuit 84 and the third circuit 88.

The integrated control section 78 is a computer that performs integrated control of each section of the electric power device 10. The integrated control section 78 functions as the estimating section and the control section, by reading and executing a program stored in a memory (not shown). In this case, it is possible to realize the function of the integrated control section 78 simply and with a low cost by using a single-board computer such as a Raspberry Pi (Registered Trademark). The detailed functions of the integrated control section 78 are described further below.

In the electric power device 10, the integrated control section 78 is capable of transmitting and receiving signals and information to and from the two inverters 74 and 76, the relay control section 80, the tray control section 82, and the first battery tray 40a to fourth battery tray 40d, via a communication line 122 such as a CAN (Controller Area Network). The electric power device 10 further includes a communication section 124. The integrated control section 78 is capable of transmitting and receiving signals and information to and from the integrated power manager 30, via the communication section 124. Due to this, the integrated control section 78 can perform control corresponding to the content of the operation of the portable device 32 performed by the user, via the communication section 124 and the integrated power manager 30. Furthermore, the integrated control section 78 can transmit various types of information of the electric power device 10 to the portable device 32, via the communication section 124 and the integrated power manager 30.

The relay control section 80 switches the first interruption portion 94, the second interruption portion 100, and each of the relays 114 and 118 to an OFF state (cutoff state) or an ON state (connected state), according to control from the integrated control section 78. The tray control section 82 controls the first battery tray 40a to fourth battery tray 40d, the first mobile battery 12a to fourth mobile battery 12d attached to the first battery tray 40a to fourth battery tray 40d, and each lock portion 50. The tray control section 82 performs the above control according to control from the integrated control section 78 and operation of the first unlock button 44a to fourth unlock button 44d performed by the user. Furthermore, the tray control section 82 performs control to light up or extinguish the first unlock notification section 46a to the fourth unlock notification section 46d and the first charging completion notification section 48a to the fourth charging completion notification section 48d.

In the above description, the serial circuit made up of the two mobile batteries 12a and 12b that are attachable and detachable and the serial circuit made up of the two mobile batteries 12c and 12d that are fixed are connected in parallel. The electric power device 10 can also have a structure in which a plurality of serial circuits that are each made up of two mobile batteries 12 are connected in parallel to the serial circuit made up of the two mobile batteries 12c and 12d that are fixed.

FIG. 5 is a circuit configuration diagram of the plurality of battery trays 40 (first battery tray 40a to fourth battery tray 40d) and the mobile batteries 12 (first mobile battery 12a to fourth mobile battery 12d) connected respectively to these battery trays 40. In FIG. 5, only one battery tray 40 and the mobile battery 12 attached to this battery tray 40 are shown. Furthermore, in FIG. 5, the configurational components of the electric power device 10 other than the battery tray 40 and the mobile battery 12 are shown in a simplified manner.

As shown in FIG. 5, each of the plurality of mobile batteries 12 includes a switch 130, a battery 132, a battery management system (BMU) 134, a resistor 136, a temperature sensor 138, a communication section 140, and a connector 142. Each mobile battery 12 is a battery pack that stores these configurational elements. The fuse 130 is a semiconductor switch such as a FET (Field Effect Transistor).

The positive electrode of the battery 132 is electrically connected to a positive terminal 142a of the connector 142, via the switch 130. The negative electrode of the battery 132 is electrically connected to a negative terminal 142b of the connector 142, via the resistor 136. The communication section 140 is connected to a signal terminal 142c of the connector 142. The communication section 140 is connected to an activation signal terminal 142d.

The battery tray 40 includes a connector 150, an engagement detection sensor 152, a control section 154, the lock portion 50, and an input/output section 156. The connector 150 includes a positive terminal 150a, a negative terminal 150b, a signal terminal 150c, and an activation signal terminal 150d. The positive terminal 150a is electrically connected to one of the fuses 92, 98, 102, and 104 (see FIG. 4). The negative terminal 150b is electrically connected to the first circuit 84 or the third circuit 88. The first circuit 84 or the third circuit 88 is a low-potential line. The signal terminal 150c and the activation signal terminal 150d are connected to the control section 154. The connector 150 of the battery tray 40 engages with the connector 142 of the mobile battery 12. Due to this, the positive terminal 142a and the positive terminal 150a become electrically connected. Further, the negative terminal 142b and the negative terminal 150b become electrically connected. Furthermore, the signal terminal 142c and the signal terminal 150c become electrically connected. Yet further, the activation signal terminal 142d and the activation signal terminal 150d become electrically connected.

The engagement detection sensor 152 detects the presence or lack of engagement between the connector 142 and the connector 150, and outputs this detection result to the control section 154. The input/output section 156 is connected to the communication line 122. The input/output section 156 can transmit and receive signals or information to and from the integrated control section 78 and the tray control section 82, via the communication line 122. The input/output section 156 receives the supply of DC voltage for driving, from the tray control section 82. The lock portion 50 sets the battery tray 40 to the locked state. Alternatively, the lock portion 50 unlocks the battery tray 40.

The control section 154 is driven by the DC voltage supplied from the tray control section 82 via the input/output section 156. Due to this, the control section 154 controls each section within the battery tray 40. Furthermore, the control section 154 transmits the detection result of the engagement detection sensor 152 to the integrated control section 78, via the input/output section 156 and the communication line 122. Yet further, when each of the connectors 142 and 150 are connected, the control section 154 supplies the BMU 134 with an activation signal via each of the activation signal terminals 142d and 150d. The BMU 134 receives the supply of the activation signal to be activated. Yet further, the control section 154 transmits and receives signals or information to and from the mobile battery 12, via each of the signal terminals 142c and 150c. Due to this, the control section 154 transmits the information received from the mobile battery 12 to the integrated control section 78 and the like, via the input/output section 156 and the communication line 122. The control section 154 transmits the instructions coming from the integrated control section 78 to the mobile battery 12. The control section 154 controls the lock portion 50 by outputting the instructions from the tray control section 82 to the lock portion 50.

In the mobile battery 12, the BMU 134 is activated in response to the activation signal being supplied from the control section 154. That is, the BMU 134 is activated by receiving the power supply from a power source (not shown) inside the mobile battery 12, based on the supply of the activation signal. The low DC voltage for driving is supplied from the tray control section 82 to the battery tray 40. Therefore, the BMU 134 can be activated by receiving the supply of the DC voltage for driving via each of the connectors 142 and 150, based on the supply of the activation signal.

The BMU 134 performs monitoring and the like of the battery 132. Specifically, the BMU 134 electrically connects the battery 132 with the first circuit 84 to third circuit 88 by turning ON the switch 130. When a control signal is received by the communication section 140 via each signal terminal 142c and 150c from the control section 154, the BMU 134 turns ON the switch 130 based on the control signal. Furthermore, the BMU 134 sequentially detects the voltage value at both ends of the resistor 136. The BMU 134 sequentially calculates the current value of the current (battery current) flowing through the battery 132, based on the detected voltage values and the resistance value of the resistor 136. Furthermore, the BMU 134 sequentially detects the value (voltage value) of the voltage (battery voltage) of the battery 132. The BMU 134 sequentially calculates the SOC of the battery 132, based on the detected voltage values and the calculated current values. Yet further, the BMU 134 sequentially acquires the temperature of the battery 132 detected by the temperature sensor 138 such as a thermistor. In the following description, the temperature of the battery 132 is referred to as the battery temperature. The BMU 134 sequentially transmits various types of information to the control section 154 of the battery tray 40 from the communication section 140, via each of the signal terminals 142c and 150c. The various types of information include the voltage values, current values, SOCs, and battery temperatures.

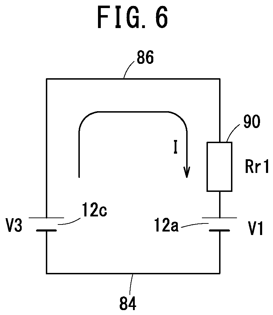

The following describes the characteristic functions of the present embodiment, while referencing FIGS. 6 to 8B. The characteristic functions of the present embodiment are the following (1) to (3). (1) The resistance value of the first resistance portion 90 (see FIG. 4) is determined. (2) The integrated control section 78 functions as the estimating section that estimates the current flowing through the first mobile battery 12a when the first interruption portion 94 is ON. (3) The integrated control section 78 functions as the control section that controls the first interruption portion 94 based on the estimated current. The following describes each of the functions (1) to (3).

First, the function (1) above will be described, while referencing FIG. 6. FIG. 6 is a circuit configuration diagram in which the circuit connections between the first mobile battery 12a and the third mobile battery 12c are simplified. In FIG. 6, the first mobile battery 12a, the third mobile battery 12c, the first resistance portion 90, and the wiring (first circuit 84 and second circuit 86) electrically connecting these configurational elements are shown.

Here, the maximum voltage of the first mobile battery 12a attached to the first battery tray 40a (see FIGS. 1, 4, and 5) is V1max. The minimum voltage of the first mobile battery 12a is V1min. The number of cells of the battery 132 forming the first mobile battery 12a is N1cell. The maximum value of the cell voltage (maximum cell voltage) of the battery 132 is V1cellmax. The minimum value of the cell voltage (minimum cell voltage) of the battery 132 is V1cellmin.

The maximum cell voltage Vicellmax is the cell voltage when the SOC of the first mobile battery 12a is at the maximum (for example, SOC: 100%). The minimum cell voltage V1cellmin is the cell voltage when the SOC of the first mobile battery 12a is at a minimum.

The maximum voltage of the third mobile battery 12c attached to the third battery tray 40c is V3max. The minimum voltage of the third mobile battery 12c is V3min. The number of cells of the battery 132 forming the third mobile battery 12c is N3cell. The maximum cell voltage of the battery 132 is V3cellmax. The minimum cell voltage of the battery 132 is V3cellmin.

In this case, the maximum voltages V1max and V3max and the minimum voltages Vimin and V3min are expressed in Expressions (1) to (4) below.

$$\text{Expression (1): V1max = V1cellmax×N1cell}$$

$$\text{Expression (2): V1min = V1cellmin×N1cell}$$

$$\text{Expression (3): V3max = V3cellmax×N3cell}$$

$$\text{Expression (4): V3min = V3cellmin×N3cell}$$

The maximum voltage difference V13max, which is the maximum value of the voltage difference between the first mobile battery 12a and the third mobile battery 12c, is expressed by Expression (5) below.

$$\text{Expression (5): V13max = V1max−V3min}$$
$$\text{= V3max−V1min}$$

When the first mobile battery 12a is attached to the first battery tray 40a, the SOCs or battery voltages might differ between the first mobile battery 12a and the third mobile battery 12c. Due to this, there is a possibility that overcurrent will flow through the mobile battery 12 having a low SOC or battery voltage from the mobile battery 12 having a high SOC or battery voltage. Therefore, the first resistance portion 90 is provided in the electric power device 10. The first resistance portion 90 is a current limiting resistor for overcurrent.

Here, the maximum value of the charge current or discharge current (maximum charge/discharge current) flowing to the first mobile battery 12a is Imax. In this case, Rrlmin, which is the minimum value of the resistance value Rr1 (minimum resistance value) of the first resistance portion 90, is expressed as shown in Expression (6) below.

$$\text{Expression (6): Rr1min = V13max/Imax}$$

Essentially, to prevent overcurrent from flowing to the first mobile battery 12a and third mobile battery 12c, the resistance value Rr1 of the first resistance portion 90 should be set to be greater than or equal to the minimum resistance value Rr1min.

In the first resistance portion 90, Joule heating occurs due to current flowing through the first mobile battery 12a. The minimum value Pimin of the power consumed due to Joule heating (tolerable power value) of the first resistance portion 90 is expressed by Expression (7) below.

$$\text{Expression (7): P1min = Imax×Rr1min}^2$$

Accordingly, if the first resistance portion 90 is a resistor rated for power consumption greater than or equal to the tolerable power value P1max, it is possible to effectively restrict the occurrence of overcurrent.

The above is a description of determining the minimum resistance value Rr1min of the first resistance portion 90. In order to describe determining the minimum resistance value Rr2min of the second resistance portion 96, the above description should be changed in the following manner. In the above description, instances of "first" should be replaced with "second" and instances of "third" should be replaced with "fourth". In other words, by replacing instances of the "first resistance portion 90" or the like with the "second resistance portion 96" or the like, the integrated control section 78 can determine the minimum resistance value Rr2min of the second resistance portion 96. Therefore, a detailed description concerning the determination of the minimum resistance value Rr2min is omitted.

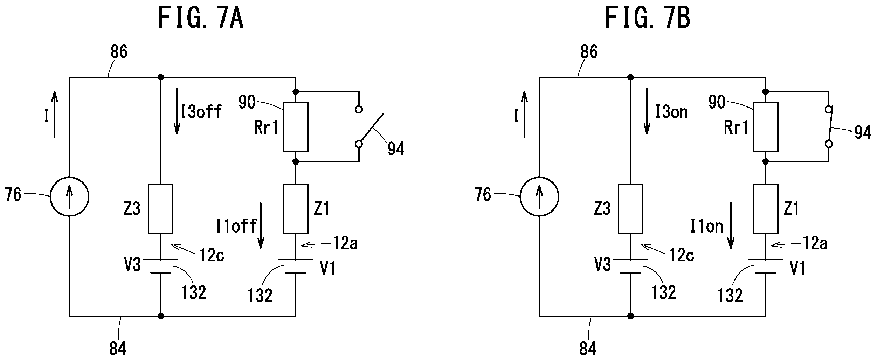

The following describes the function (2) described above, while referencing FIGS. 7A and 7B. FIGS. 7A and 7B are each a circuit configuration diagram in which the circuit connections among the first mobile battery 12a, the third mobile battery 12c, and the second inverter 76 are simplified. In FIGS. 7A and 7B, the first mobile battery 12a, the third mobile battery 12c, the first resistance portion 90, the first interruption portion 94, the second inverter 76, and the wiring (first circuit 84 and second circuit 86) electrically connecting these configurational elements are shown.

In FIGS. 7A and 7B, the first mobile battery 12a is shown schematically by a serial circuit made up of the battery 132 and an internal impedance Z1. Furthermore, in FIGS. 7A and 7B, the third mobile battery 12c is shown schematically by a serial circuit made up of the battery 132 and an internal impedance Z3. The internal impedances Z1 and Z3 are usually expressed by a resistance portion and a reactance portion. In the following description, for the sake of convenience, the internal impedances Z1 and Z3 are expressed by absolute values.

As described above, the first resistance portion 90 functions as a current limiting resistor for overcurrent. Therefore, if the current I1 flowing to the first mobile battery 12a becomes less than or equal to the tolerable current value I1th, the first interruption portion 94 is preferably switched from OFF (cutoff state) to ON (connected state). By switching the first interruption portion 94 ON, the first resistance portion 90 is shorted. If the first interruption portion 94 is in the OFF state, the integrated control section 78 estimates the estimated current I1on, which is the current value expected to be flowing to the first mobile battery 12a when it is assumed that the first interruption portion 94 is in the ON state. If the estimated current I1on is less than or equal to the tolerable current value I1th, the integrated control section 78 switches the first interruption portion 94 from OFF to ON. Specifically, the estimated current I1on is estimated using the following technique.

FIG. 7A is a circuit configuration diagram occurring when the first interruption portion 94 is in the OFF state. In this case, the current flowing from the second inverter 76 is I. The current (first current) flowing to the first mobile battery 12a is I1off. The current (first current) flowing to the third mobile battery 12c is I3off. In this case, the current I is expressed as shown in Expression (8) below.

$$\text{Expression (8): I = I1off+I3off}$$

The voltage of the output side of the second inverter 76 is Vsys. The battery voltage of the first mobile battery 12a is V1. In this case, the voltage Vsys is expressed as shown by Expression (9) below.

$$\text{Expression (9): Vsys = V1+(Z1+Rr1)×I1off}$$

The battery voltage of the third mobile battery 12c is V3. In this case, the voltage Vsys is expressed as shown by Expression (10) below.

$$\text{Expression (10): Vsys = V3+Z3×I3off}$$

From the relationship of Expression (9) = Expression (10), Expression (11) shown below is derived.

$$\text{Expression (11): (Z1+Rr1) ×I1off-Z3×I3off = V3-V1}$$

FIG. 7B is a circuit configuration diagram occurring when the first interruption portion 94 is in the ON state. In this case, the current (estimated current) flowing to the first mobile battery 12a is I1on. The current (estimated current) flowing to the third mobile battery 12c is I3on. The current I is expressed by Expression (12) below.

$$\text{Expression (12): } I = I1on+I3on$$

The voltage Vsys is expressed by Expression (13) and Expression (14) below.

$$\text{Expression (13): } Vsys = V1+Z1\times I1on$$

$$\text{Expression (14): } Vsys = V3+Z3\times I3on$$

From the relationship of Expression (13) = Expression (14), Expression (15) shown below is derived.

$$\text{Expression (15): } Z1\times I1on-Z3\times I3on = V3-V1$$

Using Expression (12) and the relationship of Expression (11) = Expression (15), Expression (16) shown below is derived.

$$\text{Expression (16): } (Z1+Rr1)\times I1off-Z3\times I3off=Z1\times I1on-Z3\times I3on$$
$$=Z1\times I1on-Z3\times(I-I1on)$$
$$=Z1\times I1on-Z3\times I+Z3\times I1on$$
$$=(Z1+Z3)\times I1on-Z3\times I$$
$$Z3\times I+(Z1+Rr1)\times I1off-Z3\times I3off = (Z1+Z3)\times I1on$$

By using this Expression (16), Expression (17) shown below is derived.

$$\text{Expression (17): } I1on = \{Z3\times I+(Z1+Rr1)\times I1off-Z3\times I3off\}/(Z1+Z3)$$
$$I1on = \{(Z1+Rr1)\times I1off+(I-I3off)\times Z3\}/(Z1+Z3)$$

Accordingly, the integrated control section 78 estimates the estimated current I1on using Expression (17) above. The integrated control section 78 judges whether this estimated current I1on is less than or equal to the tolerable current value I1th. The integrated control section 78 determines whether to switch the first interruption portion 94 from OFF to ON, based on this judgment result.

The above description is a description for estimating the estimated current I1on flowing through the first mobile battery 12a. In order to describe estimating the current I2on flowing through the second mobile battery 12b, the above description should be changed in the following manner. In the above description, instances of "first" should be replaced with "second" and instances of "third" should be replaced with "fourth". In other words, by replacing instances of the "first resistance portion 90" or the like with the "second resistance portion 96" or the like, the integrated control section 78 can estimate the current I2on flowing through the second mobile battery 12b. Therefore, a detailed description concerning the estimation technique for the current I2on is omitted.

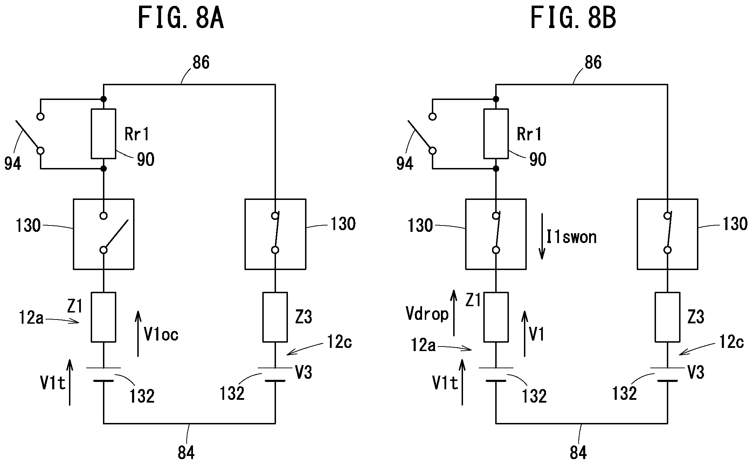

The internal impedance Z1 can be calculated in the following manner. FIGS. 8A and 8B are each a circuit configuration diagram in which the circuit connections between the first mobile battery 12a and the third mobile battery 12c are simplified. In FIGS. 8A and 8B, the switches 130 of the first mobile battery 12a and the third mobile battery 12c are also shown. FIG. 8A shows a case in which the switch 130 of the first mobile battery 12a is OFF. FIG. 8B shows a case in which the switch 130 of the first mobile battery 12a is ON. In FIGS. 8A and 8B, the first interruption portion 94 is in the OFF state. Furthermore, the switch 130 of the third mobile battery 12c is ON.

As shown in FIG. 8B, the switch 130 of the first mobile battery 12a is turned ON. Due to this, a current I1swon (second current) flows to the first mobile battery 12a. A voltage drop Vdrop occurs in the internal impedance Z1. That is, the internal impedance Z1 is expressed by Expression (18) below.

$$\text{Expression (18): } Z1 = Vdrop/I1swon$$

In this case, the battery voltage V1 is a voltage value measured by the BMU 134. The battery voltage V1 is a voltage value that is affected by the internal impedance Z1. That is, the battery voltage V1 is the sum of V1t, which is the true voltage of the battery 132 (total of the cell voltages of each cell forming the battery 132), and the voltage drop Vdrop. Accordingly, the battery voltage V1 is expressed by Expression (19) below.

$$\text{Expression (19): } Vdrop = |V1-V1t|$$

Here, when the switch 130 is OFF, the true voltage V1t becomes V1oc, which is the open-circuit voltage of the first mobile battery 12a. Therefore, the voltage drop Vdrop is expressed by Expression (20) below.

$$\text{Expression (20): } Vdrop = |V1-V1oc|$$

Accordingly, by substituting Expression (20) into Expression (18), the internal impedance Z1 is expressed by Expression (21) below.

$$\text{Expression (21): } Z1 = |(V1-V1oc)/I1swon|$$

The integrated control section 78 calculates the internal impedance Z1 using Expression (21) above. Furthermore, the integrated control section 78 can estimate the estimated current I1on using the estimated internal impedance Z1.

The above description is for calculating the internal impedance Z1 of the first mobile battery 12a. By replacing instances of the "first mobile battery 12a" with the "third mobile battery 12c" in the above description, a description of calculating the internal impedance Z3 of the third mobile battery 12c is realized. That is, by performing such a replacement, the integrated control section 78 can calculate the internal impedance Z3. Therefore, a detailed description of a technique for estimating the internal impedance Z3 is omitted.

Furthermore, by replacing instances of "first" with "second" and instances of "third" with "fourth" in the above description, a description is realized for calculating the internal impedance Z2 of the second mobile battery 12b. Yet further, by replacing instances of the "second mobile battery 12b" with instances of the "fourth mobile battery 12d" in the above description for the calculation of the internal impedance Z2 realized by the above replacement, a description is realized for calculating the internal impedance Z4 of the fourth mobile battery 12d. That is, by performing the above replacements, the integrated control section 78 can calculate each of the internal impedances Z2 and Z4. Therefore, detailed descriptions of the methods for estimating the internal impedances Z2 and Z4 are omitted.

The following describes the function (3) above. The integrated control section 78 controls the first interruption portion 94, based on the estimated current I1on. That is, the integrated control section 78 switches the first interruption portion 94 from OFF to ON if the estimated current I1on is less than or equal to the tolerable current value I1th. Furthermore, the integrated control section 78 keeps the OFF state of the first interruption portion 94 if the estimated current I1on exceeds the tolerable current value I1th.

The integrated control section 78 instructs the relay control section 80 to switch the first interruption portion 94 to one of the ON state or the OFF state, based on the above determination result. Due to this, the relay control section 80 switches the first interruption portion 94 to one of the ON state or the OFF state according to the content of the instructions from the integrated control section 78.

The above description is for switching the first interruption portion 94 to the ON state or the OFF state. By replacing instances of "first" with "second" in the above description, a description is realized for switching the second interruption portion 100 to the ON state or the OFF state. That is, by replacing instances of the "first interruption portion 94" with the "second interruption portion 100", the second interruption portion 100 can be switched to the ON state or the OFF state. Therefore, a detailed description of switching the second interruption portion 100 to the ON state or the OFF state is omitted.

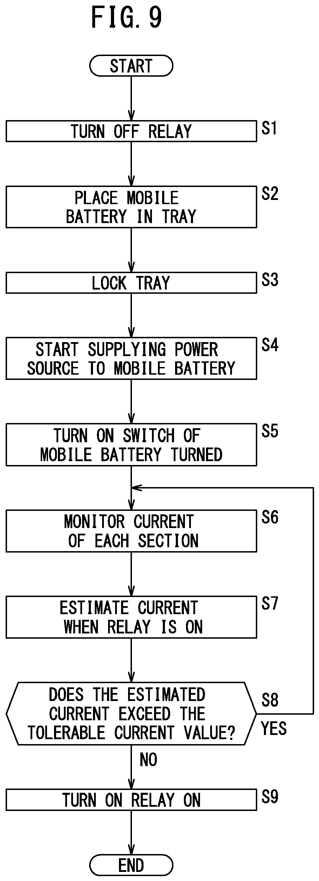

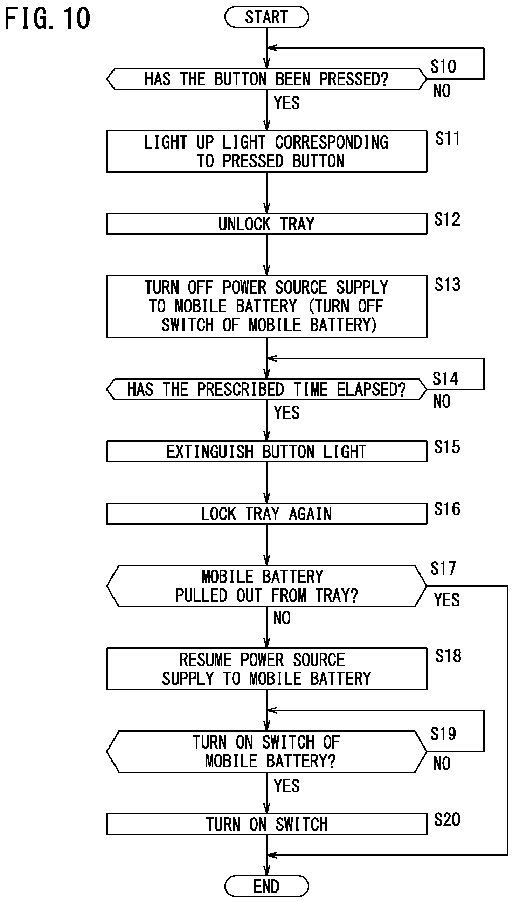

The operation of the electric power device 10 (control method of the electric power device 10) configured as described above will be described while referencing FIGS. 9 and 10. Here, as an example, the operation in a case of attaching the first mobile battery 12a to the first battery tray 40a (see FIG. 9) will be described. Furthermore, the operation in a case of removing the first mobile battery 12a from the first battery tray 40a (see FIG. 10) will be described. In the descriptions of these operations, FIGS. 1 to 8B will also be referenced as necessary. A case of attaching the second battery tray 40b to the second mobile battery 12b and a case of removing the second mobile battery 12b from the second battery tray 40b are similar to the above.

First, the operation of FIG. 9 will be described.

At step S1 of FIG. 9, the integrated control section 78 instructs the relay control section 80 to set the first interruption portion 94 to the OFF state. Due to this, the relay control section 80 sets the first interruption portion 94, which is a relay, to the OFF state.

At step S2, the user places the first mobile battery 12a on the first battery tray 40a. Due to this, the first mobile battery 12a is stored within the first slot 34a in a state of being attached to the first battery tray 40a. In this case, the connector 142 of the first mobile battery 12a engages with the connector 150 of the first battery tray 40a. The engagement detection sensor 152 detects the engagement state between the two connectors 142 and 150, and outputs the detection result to the control section 154. The control section 154 transmits the detection result to the integrated control section 78, via the input/output section 156 and the communication line 122.

At step S3, the lock portion 50 sets the first battery tray 40a attached to the first mobile battery 12a to the locked state, based on the detection result of the engagement detection sensor 152 output to the control section 154. Due to this, it is possible to prevent the first mobile battery 12a from being removed from the first battery tray 40a.

At step S4, the integrated control section 78 instructs the control section 154 of the first battery tray 40a, via the communication line 122, to start the power source supply to the first mobile battery 12a. Due to this, the control section 154 supplies the activation signal to the BMU 134 of the first mobile battery 12a, via each of the activation signal terminals 142d and 150d, according to the instructions from the integrated control section 78. Due to this, the BMU 134 is activated by receiving the power supply from a power source section (not shown), based on the supply of the activation signal. Alternatively, the BMU 134 is activated by receiving the supply of the DC voltage for driving from the first battery tray 40a, via each of the connectors 142 and 150.

As a result, the BMU 134 starts communication with the control section 154 via the communication section 140 and each of the signal terminals 142c and 150c. Due to this, the BMU 134 can transmit and receive signals or information to and from the integrated control section 78, via the control section 154, the input/output section 156, and the communication line 122.

At step S5, the BMU 134 turns ON the switch 130. Due to this, the first mobile battery 12a is electrically connected to the first circuit 84 and the second circuit 86, via the first battery tray 40a. The BMU 134 may turn ON the switch 130 according to the instructions received from the integrated control section 78 via the communication line 122 and the control section 154. Alternatively, the BMU 134 may turn ON the switch 130 according to the instructions from the control section 154. Alternatively, the BMU 134 may turn ON the switch 130 upon activation.

At step S6, the BMU 134 measures the battery voltage, the battery current, the battery temperature, and the SOC of the first mobile battery 12a. These measurement results are transmitted to the integrated control section 78 via the communication section 140, each of the signal terminals 142c and 150c, the control section 154, the input/output section 156, and the communication line 122.

At step S7, the integrated control section 78 estimates the estimated current I1on, using Expression (17), based on each of the measurement results received from the BMU 134 of the first mobile battery 12a. The estimated current I1on is the current that flows to the first mobile battery 12a when it is assumed that the first interruption portion 94 enters the ON state.

The internal impedance Z1 of the first mobile battery 12a, the resistance value Rr1 of the first resistance portion 90, and the internal impedance Z3 of the third mobile battery 12c are calculated in advance, and stored in a memory (not shown). The current I1off is the current value measured in step S6. Furthermore, the integrated control section 78 can transmit and receive signals and information to and from the control section 154 of the third mobile battery 12c and the second inverter 76, via the communication line 122. Therefore, the integrated control section 78 is capable of receiving the measurement result of the current I3off from the control section 154 of the third mobile battery 12c. Furthermore, the integrated control section 78 is capable of receiving the measurement result of the current I flowing through the output side of the second inverter 76.

At step S8, the integrated control section 78 determines whether the estimated current I1on, which was estimated in step S7, exceeds the tolerable current value I1th.

If I1on > I1th (step S8: YES), the integrated control section 78 determines that the first interruption portion 94 is remaining in the OFF state. This is because, when the first interruption portion 94 is switched from OFF to ON, there is a possibility that overcurrent that exceeds the tolerable current value I1th may flow to the first mobile battery 12a. Due to this, the integrated control section 78 returns to step S6, and repeats the processing of steps S6 to S8.

If I1on ≤ I1th (step S8: NO), the integrated control section 78 proceeds to step S9. At step S9, the integrated control section 78 judges that, even if the first interruption portion 94 is switched from OFF to ON, overcurrent exceeding the tolerable current value I1th will not flow to the first mobile battery 12a. Next, the integrated control section 78 determines that the first interruption portion 94 is to be switched from OFF to ON, based on the judgment result. Next, the integrated control section 78 outputs instructions for switching the first interruption portion 94 from OFF to ON to the relay control section 80 via the communication line 122. Due to this, the relay control section 80 switches the first interruption portion 94 from OFF to ON. As a result, the first resistance portion 90 is shorted by the first interruption portion 94. In this state, power is supplied to and discharged from the first mobile battery 12a.

In the processing of steps S6 to S9, the current I2on flowing to the second mobile battery 12b may also be estimated. Furthermore, in a case where I1on ≤ I1th and I2on ≤ I2th, the first interruption portion 94 may be switched from OFF to ON.

Next, the operation of FIG. 10 will be described.

When the user presses the first unlock button 44a at step S10 of FIG. 10 (step S10: YES), the process proceeds to step S11, and the first unlock notification section 46a lights up.

At step S12, the tray control section 82 instructs the control section 154 of the first battery tray 40a to unlock the first battery tray 40a. The control section 154 controls the lock portion 50 according to the instructions from the tray control section 82, and unlocks the first battery tray 40a. The control section 154 transmits to the integrated control section 78, via the input/output section 156 and the communication line 122, notification that the first battery tray 40a has been unlocked.

At step S13, the integrated control section 78 receives information about the unlocking. Next, the integrated control section 78 instructs the control section 154 of the first battery tray 40a, via the communication line 122, to stop the power source supply to the first mobile battery 12a. Due to this, the control section 154 stops the supply of the activation signal to the BMU 134, according to the instructions from the integrated control section 78. As a result, the BMU 134 is turned OFF. As a result, the switch 130 is also turned OFF. Therefore, the transmission and reception of signals or information between the BMU 134 and the control section 154 and integrated control section 78 is stopped. Due to this, the integrated control section 78 can know that communication with the first mobile battery 12a has been discontinued. That is, the integrated control section 78 can know that the operation of the BMU 134 has stopped.

At step S14, the integrated control section 78 activates a timer (not shown) when the power supply to the first mobile battery 12a stops, and measures the passage of a certain time. If the certain time has passed (step S14: YES), the integrated control section 78 proceeds to step S15. At step S15, the integrated control section 78 determines that the first battery tray 40a is to be locked again, and instructs the tray control section 82 and the control section 154 of the first battery tray 40a.

The tray control section 82 receives the instructions from the integrated control section 78 and extinguishes the first unlock notification section 46a. At step S16, the control section 154 of the first battery tray 40a receives the instructions from the integrated control section 78, and controls the lock portion 50 to again lock the first battery tray 40a. The user can understand that the first battery tray 40a is again in the locked state, due to the first unlock notification section 46a being extinguished.

At the following step S17, the integrated control section 78 checks whether the first mobile battery 12a has been pulled out from the first battery tray 40a. In this case, the integrated control section 78 judges whether a detection result of the engagement detection sensor 152 indicating that the two connectors 142 and 150 have been disengaged is being received.

If a detection result indicating that the two connectors 142 and 150 have been disengaged is being received (step S17: YES), the integrated control section 78 judges that the first mobile battery 12a has been pulled out from the first battery tray 40a. Due to this, the process of FIG. 10 ends.

If a detection result indicating that the two connectors 142 and 150 are in a state of being engaged is being received (step S17: NO), the integrated control section 78 judges that the first mobile battery 12a has been attached to the first battery tray 40a.

At the following step S18, the integrated control section 78 instructs the control section 154 of the first battery tray 40a, via the communication line 122, to resume the power source supply to the first mobile battery 12a. Due to this, the control section 154 resumes the supply of the activation signal to the BMU 134, according to the instructions from the integrated control section 78. As a result, the BMU 134 receives the supply of the activation signal, and resumes the supply of power from the power source section (not shown) to be reactivated. As a result, the transmission and reception of signals or information between the BMU 134 and the control section 154 and integrated control section 78 is resumed. As a result, the integrated control section 78 can know that the communication with the first mobile battery 12a has been resumed. That is, the integrated control section 78 can know that the BMU 134 has been activated.

At the following step S19, the integrated control section 78 judges whether the switch 130 of the first mobile battery 12a is to be turned ON. If it is determined that the switch 130 of the first mobile battery 12a is to be turned ON (step S19: YES), the integrated control section 78 proceeds to step S20. At step S20, the integrated control section 78 instructs the BMU 134 of the first mobile battery 12a, via the communication line 122 and the control section 154, to turn ON the switch 130. Due to this, the BMU 134 turns ON the switch 130, according to the instructions from the integrated control section 78. As a result, power can be input to and output from the first mobile battery 12a.

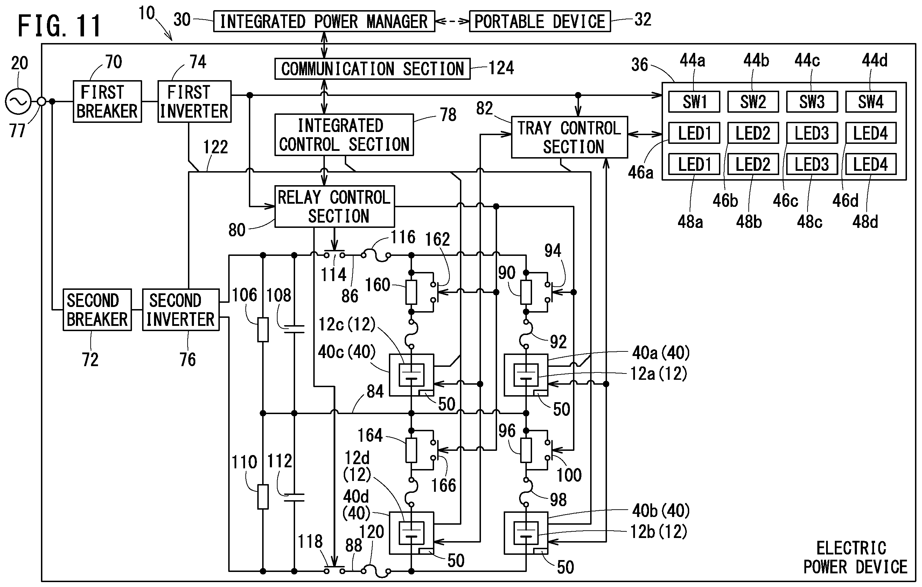

Next, modification (first modification to third modification) of the electric power device 10 will be described, while referencing FIGS. 11 to 13.

In the first modification, as shown in FIG. 11, a parallel circuit made up of a third resistance portion 160 and a third interruption portion 162 is electrically connected in series to the third battery tray 40c, between the first circuit 84 and the second circuit 86. A parallel circuit made up of a fourth resistance portion 164 and a fourth interruption portion 166 is electrically connected in series to the fourth battery tray 40d, between the first circuit 84 and the third circuit 88. The third interruption portion 162 and the fourth interruption portion 166 are controlled to be in the ON state or the OFF state by the relay control section 80, in the same manner as the first interruption portion 94 and the second interruption portion 100.

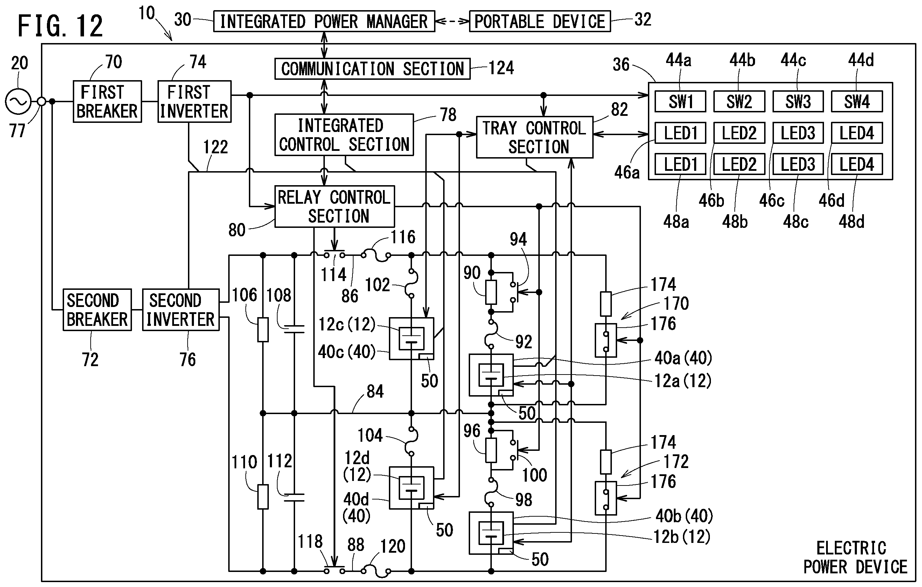

In the second modification, as shown in FIG. 12, a first balance circuit 170 is electrically connected between the first circuit 84 and the second circuit 86. The first balance circuit 170 is electrically connected in parallel to the first battery tray 40a, the fuse 92, the first resistance portion 90, and the first interruption portion 94. Furthermore, in the second modification, a second balance circuit 172 is electrically connected between the first circuit 84 and the third circuit 88. The second balance circuit 172 is electrically connected in parallel to the second battery tray 40b, the fuse 98, the second resistance portion 96, and the second interruption portion 100. The first balance circuit 170 and the second balance circuit 172 are provided to balance the battery voltage V1 of the first mobile battery 12a attached to the first battery tray 40a and the battery voltage V2 of the second mobile battery 12b attached to the second battery tray 40b.

In the second modification, the first balance circuit 170 and the second balance circuit 172 are each a passive voltage-balancing circuit including a resistor 174. That is, the first balance circuit 170 and the second balance circuit 172 are each a serial circuit having the resistor 174 and a switch 176. The switch 176 is controlled to be ON or OFF by the relay control section 80.

In a case where each switch 176 is ON, current flows to the resistor 174 connected to whichever mobile battery 12 among the first mobile battery 12a and the second mobile battery 12b has the higher battery voltage. Due to this, the resistor 174 generates heat and the energy of the mobile battery 12 is consumed. As a result, the battery voltage of this mobile battery 12 drops, and a balance can be achieved between the respective battery voltages V1 and V2 of the first mobile battery 12a and second mobile battery 12b.

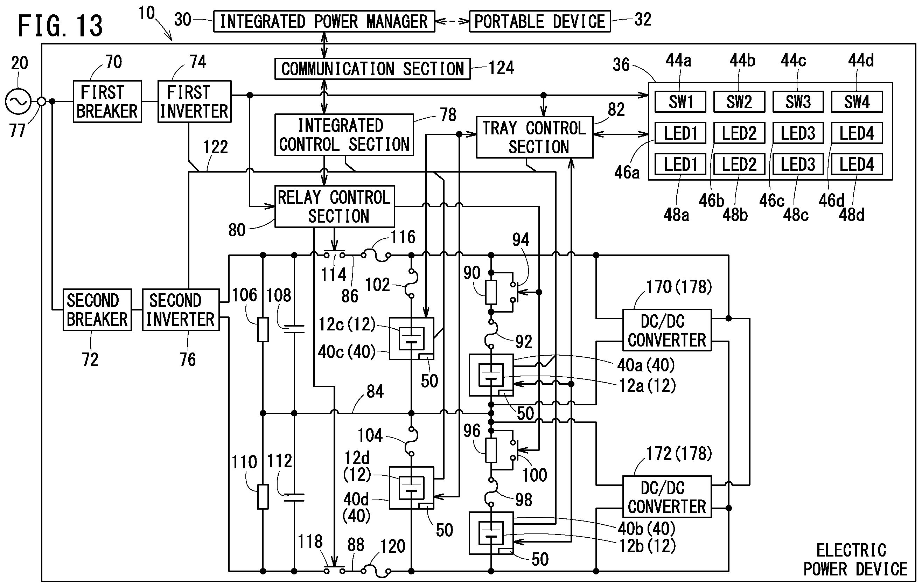

In the third embodiment, as shown in FIG. 13, the first balance circuit 170 and the second balance circuit 172 are each an active voltage-balancing circuit. The first balance circuit 170 and the second balance circuit 172 each include an insulated DC/DC converter 178.

A primary side of the DC/DC converter 178 forming the first balance circuit 170 is electrically connected to the first circuit 84 and the second circuit 86. Furthermore, the secondary side of this DC/DC converter 178 is electrically connected to the second circuit 86 and the third circuit 88.

The primary side of the DC/DC converter 178 forming the second balance circuit 172 is electrically connected to the first circuit 84 and the third circuit 88. Furthermore, the secondary side of this DC/DC converter 178 is electrically connected to the second circuit 86 and the third circuit 88.

The low-potential terminals on the secondary sides of the DC/DC converters 178 are connected to each other.

Among the first mobile battery 12a and the second mobile battery 12b, the mobile battery 12 with the higher battery voltage has its battery voltage stepped up by the DC/DC converter 178 electrically connected in parallel to this mobile battery 12. Due to this, the DC power of the stepped-up voltage is output to the second inverter 76. The mobile battery 12 having the lower battery power has the voltage on the secondary side thereof stepped down by the DC/DC converter 178 electrically connected in parallel to this mobile battery 12. Due to this, the DC power of the stepped-down voltage is supplied to this mobile battery 12. As a result, a balance can be achieved between the respective battery voltages V1 and V2 of the first mobile battery 12a and second mobile battery 12b.

The present invention is not limited to the above-described embodiments, and it goes without saying that various modifications could be adopted therein without departing from the essence and gist of the present invention.

In addition to the above description, the present embodiment can also implement the following.

(1) Charging and discharging of each mobile battery 12 is possible. (2) It is possible to know the charge amount and discharge amount (instantaneous value or integrated value) of each mobile battery 12. (3) It is possible to know the state of charging, discharging, and the like of each mobile battery 12. (4) The SOC of each mobile battery 12 can be acquired, and therefore it is possible to know the overall SOC. (5) It is possible to know the state of each mobile battery 12. (6) It is possible to check the state or the like of each mobile battery 12 with the portable device 32. Furthermore, various instructions (control) can be issued to the electric power device 10 from the portable device 32 or from an aggregator with whom the user has a contract. (7) In a case where a smart meter is attached to the various devices such as the photovoltaic device 22 in the residence 18 and communication with the integrated power manager 30 is possible, the integrated power manager 30 and the smart meter can be linked. In addition, it is possible to issue instructions to each device according to the state of each mobile battery 12. Furthermore, it is possible to issue instructions to each device according to the state of each mobile battery 12, in conjunction with the loads inside the residence 18.

In the present embodiment, the first resistance portion 90 and the second resistance portion 96 may be variable resistors. Due to this, each of the resistance values Rr1 and Rr2 can be easily set by adjusting the resistance value Rr1 of the first resistance portion 90 and the resistance value Rr2 of the second resistance portion 96.

In the above description, the first battery tray 40a to fourth battery tray 40d are set to the locked state (restrained state) using the lock portions 50. In the present embodiment, a cap (not shown) may be provided to each slot 34, and the first battery tray 40a to fourth battery tray 40d may be set to the locked state by not opening the caps. In this case, the first battery tray 40a to fourth battery tray 40d are unlocked by opening the caps.

The following is a record of the inventions that can be understood from the embodiments described above.

A first aspect of the present invention is an electric power device comprising a plurality of attachment portions (40) to which a plurality of power storage devices (12) can be attached, wherein among the plurality of attachment portions, a first attachment potion (40a) and a second attachment portion (40b) are arranged to be connected in series, and the electric power device comprises: a first circuit (84) electrically connected to the first attachment portion and the second attachment portion; a second circuit (86) electrically connected to a side of the first attachment portion opposite the first circuit; a third circuit (88) electrically connected to a side of the second attachment portion opposite the first circuit; a first resistance portion (90) connected in series to the first attachment portion, between the first circuit and the second circuit; a first interruption portion (94) connected in parallel to the first resistance portion; a second resistance portion (96) connected in series to the second attachment portion, between the first circuit and the third circuit; and a second interruption portion (100) connected in parallel to the second resistance portion.

In the present invention, the first attachment portion, the first resistance portion, and the first interruption portion are provided between the first circuit and the second circuit. The second attachment portion, the second resistance portion, and the second interruption portion are provided between the first circuit and the third circuit. Due to this, even when a power storage device is attached to or detached from one of the attachment portions, a power storage device attached to the other attachment portion does not enter an electrically insulated state inside the electric power device. As a result, it is possible to continue exchanging power with respect to the plurality of power storage devices with a simple and low-cost configuration.

Furthermore, when a power storage device is attached to the first attachment portion while the first interruption portion is in the cutoff state, this power storage device is connected in series to the first resistance portion. Due to this, the occurrence of overcurrent when the power storage device is attached can be restricted. Furthermore, compared to a case where a DC/DC converter is used, the occurrence of overcurrent can be restricted with a simple and low-cost configuration.

In the first aspect of the present invention, among the plurality of attachment portions, a third attachment portion (40c) is connected in parallel to the first attachment portion, the first resistance portion, and the first interruption portion, between the first circuit and the second circuit; and among the plurality of attachment portions, a fourth attachment portion (40d) is connected in parallel to the second attachment portion, the second resistance portion, and the second interruption portion, between the first circuit and the third circuit.

Due to this, even when a plurality of attachment portions are connected in parallel respectively between the first circuit and the second circuit and between the first circuit and the third circuit, each of the effects described above can be easily realized.

In the first aspect of the present invention, a resistance value (Rr1) of the first resistance portion is determined based on a maximum voltage (V1max) of the power storage device attached to the first attachment portion and a minimum voltage (V3min) of the power storage device attached to the third attachment portion, or is determined based on a minimum voltage (V1min) of the power storage device attached to the first attachment portion and a maximum voltage (V3max) of the power storage device attached to the third attachment portion.

Due to this, it is possible to easily calculate the resistance value of the first resistance portion serving as the current limiting resistor for overcurrent. As a result, the occurrence of overcurrent can be easily restricted using the first resistance portion.

In the first aspect of the present invention, the electric power device further comprises an estimating section (78) that, in a case where a power storage device is attached to the first attachment portion and the first interruption portion is in a cutoff state, estimates an estimated current (I1on) that is a current expected to flow to the power storage device when it is assumed that the first interruption portion is in a connected state.

Due to this, it is possible to easily judge whether the estimated current is overcurrent. As a result, the occurrence of overcurrent can be reliably restricted.

In the first aspect of the present invention, the estimating section estimates the estimated current using an internal impedance (Z1) of the power storage device attached to the first attachment portion, an internal impedance (Z3) of the power storage device attached to the third attachment portion, a resistance value of the first resistance portion, and first currents (I1off, I3off) flowing respectively to the power storage device attached to the first attachment portion and the power storage device attached to the third attachment portion when the first interruption portion is in the cutoff state.

Due to this, it is possible to precisely and accurately estimate the estimated current flowing to the power storage device attached to the first attachment portion. As a result, the occurrence of overcurrent can be reliably restricted.

In the first aspect of the present invention, the estimating section calculates the internal impedance of the power storage device attached to the first attachment portion, based on a second current (I1swon) flowing to the power storage device attached to the first attachment portion when the first interruption portion is in the cutoff state, a voltage (V1) of the power storage device occurring when the second current flows thereto, and an open circuit voltage (V1oc) of the power storage device.

Due to this, it is possible to more accurately estimate the estimated current flowing through the power storage device attached to the first attachment portion, by using the calculated internal impedance.

In the first aspect of the present embodiment, the electric power device further comprises a control section (78) that controls the first interruption portion based on the estimated current estimated by the estimating section.

Due to this, it is possible to avoid overcurrent caused by inadvertently controlling the first interruption portion.

In the first aspect of the present invention, the control section switches the first interruption portion to the connected state if the estimated current is less than or equal to a tolerable current value (I1th), and keeps the first interruption portion in the cutoff state if the estimated current exceeds the tolerable current value.

Due to this, it is possible to reliably and efficiently restrict the occurrence of overcurrent.

In the first aspect of the present invention, the first attachment portion and the second attachment portion are arranged at higher positions than the third attachment portion and the fourth attachment portion.

Due to this, the user can easily insert and remove the power storage device to and from the first attachment portion and second detachment portion.

In the first aspect of the present invention, the electric power device further comprises: a third resistance portion (160) connected in series to the third attachment portion, between the first circuit and the second circuit; a third interruption portion (162) connected in parallel to the third resistance portion; a fourth resistance portion (164) connected in series to the fourth attachment portion, between the first circuit and the third circuit; and a fourth interruption portion (166) connected in parallel to the fourth resistance portion.

Due to this, even when a power storage device is inserted into or removed from the third attachment portion or fourth attachment portion, the same effects (restriction of overcurrent and the like) as realized by the power storage devices attached to the first attachment portion and second attachment portion can be realized.

In the first aspect of the present invention, the power storage device attached to the third attachment portion is a power storage device fixed to the third attachment portion; and the power storage device attached to the fourth attachment portion is a power storage device fixed to the fourth attachment portion.

Due to this, the electric power device can be easily applied as a stationary power source device.

In the first aspect of the present invention, the electric power device further comprises: a first balance circuit (170) connected in parallel to the first attachment portion, the first resistance portion, and the first interruption portion, between the first circuit and the second circuit; and a second balance circuit (172) connected in parallel to the second attachment portion, the second resistance portion, and the second interruption portion, between the first circuit and the third circuit, wherein the first balance circuit and the second balance circuit balance a voltage (V1) of the power storage device attached to the first attachment portion and a voltage (V2) of the power storage device attached to the second attachment portion.

Due to this, it is possible to balance the voltages of each power storage device, to align the SOCs of each power storage device.

In the first aspect of the present invention, the first balance circuit and the second balance circuit are circuits including a resistor (174) or are insulated DC/DC converters (178) .

In the case of a balance circuit including a resistor, each voltage can be balanced by consuming the energy of the power storage device with a higher voltage through the Joule heating of the resistor. Furthermore, in a case of a balance circuit including an insulated DC/DC converter, it is possible to balance each voltage by removing energy from the power storage device with a higher voltage and supplying the energy to the power storage device with a lower voltage.

In the first aspect of the present invention, the electric power device further comprises: a restraining portion (50) that sets the power storage device to a restrained state in which the power storage device cannot be removed from the first attachment portion; an instructing section (44a, 44b) that provides instructions for dissolving the restrained state caused by the restraining portion; and a notifying section (46a, 46b) that provides notification that the restrained state caused by the restraining portion has been dissolved.

Due to this, the restrained state can be dissolved as a result of the operation of the instructing section performed by the user. Furthermore, notification of the dissolution of the restrained state is provided. As a result, the user easily removes the power storage device from the attachment portion corresponding to the operated instructing section, after having checked the notification about the dissolution of the restrained state.

In the first aspect of the present invention, the restraining portion causes the restrained state to be realized again after a certain time has elapsed from when the restrained state was dissolved.

Due to this, even when the restrained state is dissolved once, the restrained state is reinstated if the user does not remove the power storage device from the attachment portion within a certain time. As a result, it is possible to avoid a power storage device in the attached state from being unintentionally removed from the attachment portion. Therefore, an effective anti-theft measure for power storage devices is provided.

In the first aspect of the present invention, the electric power device further comprises a connection portion (77) that is electrically connected to the first attachment portion and the second attachment portion, and connected to an external power source (20, 22) or to another electric power device (24, 26) that is external.

Due to this, it is possible to exchange power between the power storage devices attached to the first attachment portion and second attachment portions and a power source or another electric power device.

In the first aspect of the present invention, the electric power device further comprises power conversion devices (74, 76) arranged on power paths between the connection portion and the first attachment portion and second attachment portion.

Due to this, it is possible to more easily exchange power between the power storage devices attached to the first attachment portion and second attachment portions and a power source or another electric power device.

A second aspect of the present invention is a control method of an electric power device including a plurality of attachment portions to which a plurality of power storage devices can be attached, comprising: in a case where, among the plurality of attachment portions, a first attachment potion and a second attachment portion are arranged to be connected in series, the first attachment portion and the second attachment portion are electrically connected to a first circuit, a second circuit is electrically connected to a side of the first attachment portion opposite the first circuit, a third circuit is electrically connected to a side of the second attachment portion opposite the first circuit, a first resistance portion is connected in series to the first attachment portion between the first circuit and the second circuit, a first interruption portion is connected in parallel to the first resistance portion, a second resistance portion is connected in series to the second attachment portion between the first circuit and the third circuit, and a second interruption portion is connected in parallel to the second resistance portion: a step of setting the first interrupt portion to a cutoff state; a step of attaching the power storage device to the first attachment portion; a step of estimating an estimated current, which is a current expected to flow to the power storage device when it is assumed that the first interruption portion is in a connected state; and a step of controlling the first interruption portion based on the estimated current that has been estimated.

In the present invention, the first attachment portion, the first resistance portion, and the first interruption portion are provided between the first circuit and the second circuit. The second attachment portion, the second resistance portion, and the second interruption portion are provided between the first circuit and the third circuit. Due to this, even when a power storage device is attached to or detached from one of the attachment portions, the power storage device attached to the other attachment portion does not enter an electrically insulated state inside the electric power device. As a result, it is possible to continue exchanging power with respect to the plurality of power storage devices with a simple and low-cost configuration.

Furthermore, when a power storage device is attached to the first attachment portion while the first interruption portion is in the cutoff state, this power storage device is connected in series to the first resistance portion. Due to this, the occurrence of overcurrent when the power storage device is attached can be restricted. Furthermore, compared to a case where a DC/DC converter is used, the occurrence of overcurrent can be restricted with a simple and low-cost configuration.

**Claims**

1. An electric power device comprising a plurality of attachment portions (40) to which a plurality of power storage devices (12) is attachable, wherein:

    among the plurality of attachment portions, a first attachment potion (40a) and a second attachment portion (40b) are arranged to be connected in series, and
    the electric power device comprises:

        a first circuit (84) electrically connected to the first attachment portion and the second attachment portion;
        a second circuit (86) electrically connected to a side of the first attachment portion opposite the first circuit;
        a third circuit (88) electrically connected to a side of the second attachment portion opposite the first circuit;
        a first resistance portion (90) connected in series to the first attachment portion, between the first circuit and the second circuit;
        a first interruption portion (94) connected in parallel to the first resistance portion;
        a second resistance portion (96) connected in series to the second attachment portion, between the first circuit and the third circuit; and
        a second interruption portion (100) connected in parallel to the second resistance portion.

2. The electric power device according to claim 1, wherein:

among the plurality of attachment portions, a third attachment portion (40c) is connected in parallel to the first attachment portion, the first resistance portion, and the first interruption portion, between the first circuit and the second circuit; and

among the plurality of attachment portions, a fourth attachment portion (40d) is connected in parallel to the second attachment portion, the second resistance portion, and the second interruption portion, between the first circuit and the third circuit.

3. The electric power device according to claim 2, wherein:
a resistance value (Rr1) of the first resistance portion is determined based on a maximum voltage (V1max) of the power storage device attached to the first attachment portion and a minimum voltage (V3min) of the power storage device attached to the third attachment portion, or is determined based on a minimum voltage (V1min) of the power storage device attached to the first attachment portion and a maximum voltage (V3max) of the power storage device attached to the third attachment portion.

4. The electric power device according to claim 2 or 3, further comprising:
an estimating section (78) that, in a case where the power storage device is attached to the first attachment portion and the first interruption portion is in a cutoff state, estimates an estimated current (I1on) that is a current expected to flow to the power storage device when it is assumed that the first interruption portion is in a connected state.

5. The electric power device according to claim 4, wherein:
the estimating section estimates the estimated current using

an internal impedance (Z1) of the power storage device attached to the first attachment portion,
an internal impedance (Z3) of the power storage device attached to the third attachment portion,
a resistance value of the first resistance portion, and
first currents (I1off, I3off) flowing respectively to the power storage device attached to the first attachment portion and the power storage device attached to the third attachment portion when the first interruption portion is in the cutoff state.

6. The electric power device according to claim 4 or 5, wherein:
the estimating section calculates the internal impedance of the power storage device attached to the first attachment portion, based on

a second current (I1swon) flowing to the power storage device attached to the first attachment portion when the first interruption portion is in the cutoff state,
a voltage (V1) of the power storage device occurring when the second current flows thereto, and
an open circuit voltage (V1oc) of the power storage device.

7. The electric power device according to any one of claims 4 to 6, further comprising:
a control section (78) that controls the first interruption portion based on the estimated current estimated by the estimating section.

8. The electric power device according to claim 7, wherein:
the control section switches the first interruption portion to the connected state if the estimated current is less than or equal to a tolerable current value (I1th), and keeps the first interruption portion in the cutoff state if the estimated current exceeds the tolerable current value.

9. The electric power device according to any one of claims 2 to 8, wherein:
the first attachment portion and the second attachment portion are arranged at higher positions than the third attachment portion and the fourth attachment portion.

10. The electric power device according to any one of claims 2 to 9, further comprising:

a third resistance portion (160) connected in series to the third attachment portion, between the first circuit and the second circuit;
a third interruption portion (162) connected in parallel to the third resistance portion;
a fourth resistance portion (164) connected in series to the fourth attachment portion, between the first circuit and the third circuit; and

a fourth interruption portion (166) connected in parallel to the fourth resistance portion.

**11.** The electric power device according to any one of claims 2 to 10, wherein:

the power storage device attached to the third attachment portion is a power storage device fixed to the third attachment portion; and
the power storage device attached to the fourth attachment portion is a power storage device fixed to the fourth attachment portion.

**12.** The electric power device according to any one of claims 1 to 11, further comprising:

a first balance circuit (170) connected in parallel to the first attachment portion, the first resistance portion, and the first interruption portion, between the first circuit and the second circuit; and
a second balance circuit (172) connected in parallel to the second attachment portion, the second resistance portion, and the second interruption portion, between the first circuit and the third circuit, wherein:
the first balance circuit and the second balance circuit balance a voltage (V1) of the power storage device attached to the first attachment portion and a voltage (V2) of the power storage device attached to the second attachment portion.

**13.** The electric power device according to claim 12, wherein:
the first balance circuit and the second balance circuit are circuits including a resistor (174) or are insulated DC/DC converters (178).

**14.** The electric power device according to any one of claims 1 to 13, further comprising:

a restraining portion (50) that sets the power storage device to a restrained state in which the power storage device cannot be removed from the first attachment portion;
an instructing section (44a) that provides instructions for dissolving the restrained state caused by the restraining portion; and
a notifying section (46a) that provides notification that the restrained state caused by the restraining portion has been dissolved.

**15.** The electric power device according to claim 14, wherein:
the restraining portion causes the restrained state to be realized again after a certain time has elapsed from when the restrained state was dissolved.

**16.** The electric power device according to any one of claims 1 to 15, further comprising:
a connection portion (77) that is electrically connected to the first attachment portion and the second attachment portion, and connected to an external power source (20, 22) or to another electric power device (24, 26) that is external.

**17.** The electric power device according to claim 16, further comprising:
power conversion devices (74, 76) arranged on power paths between the connection portion and the first attachment portion and second attachment portion.

**18.** A control method of an electric power device including a plurality of attachment portions to which a plurality of power storage devices can be attached,

in a case where, among the plurality of attachment portions, a first attachment potion and a second attachment portion are arranged to be connected in series, the first attachment portion and the second attachment portion are electrically connected to a first circuit, a second circuit is electrically connected to a side of the first attachment portion opposite the first circuit, a third circuit is electrically connected to a side of the second attachment portion opposite the first circuit, a first resistance portion is connected in series to the first attachment portion between the first circuit and the second circuit, a first interruption portion is connected in parallel to the first resistance portion, a second resistance portion is connected in series to the second attachment portion between the first circuit and the third circuit, and a second interruption portion is connected in parallel to the second resistance portion,
the control method comprising:

a step of setting the first interrupt portion to a cutoff state;

a step of attaching the power storage device to the first attachment portion;

a step of estimating an estimated current, which is a current expected to flow to the power storage device when it is assumed that the first interruption portion is in a connected state; and

a step of controlling the first interruption portion based on the estimated current that has been estimated.

# FIG. 1

# FIG. 2

POWER GENERATION — 22

POWER STORAGE — 28, 26, 10

32

30 — 18

COMMERCIAL POWER SOURCE — 20

APPLIANCE — 24

EP 4 307 507 A1

# FIG. 3

FIG. 4

ELECTRIC POWER DEVICE

EP 4 307 507 A1

## FIG. 5

EP 4 307 507 A1

FIG. 6

# FIG. 7A

# FIG. 7B

FIG. 8A

FIG. 8B

# FIG. 9

START

TURN OFF RELAY — S1

PLACE MOBILE
BATTERY IN TRAY — S2

LOCK TRAY — S3

START SUPPLYING POWER
SOURCE TO MOBILE BATTERY — S4

TURN ON SWITCH OF
MOBILE BATTERY TURNED — S5

MONITOR CURRENT
OF EACH SECTION — S6

ESTIMATE CURRENT
WHEN RELAY IS ON — S7

DOES THE ESTIMATED
CURRENT EXCEED THE
TOLERABLE CURRENT VALUE? — S8

YES

NO

TURN ON RELAY ON — S9

END

FIG. 10

```
                        ( START )
                           │
                           ▼ ◄──────────────┐
              ┌─────────────────────────────┐  S10
              │ HAS THE BUTTON BEEN PRESSED? │──── NO
              └─────────────────────────────┘
                           │ YES
                           ▼
              ┌─────────────────────────────┐  S11
              │  LIGHT UP LIGHT CORRESPONDING│
              │      TO PRESSED BUTTON       │
              └─────────────────────────────┘
                           │
                           ▼
              ┌─────────────────────────────┐  S12
              │         UNLOCK TRAY          │
              └─────────────────────────────┘
                           │
                           ▼
              ┌─────────────────────────────┐  S13
              │  TURN OFF POWER SOURCE SUPPLY│
              │  TO MOBILE BATTERY (TURN OFF │
              │   SWITCH OF MOBILE BATTERY)  │
              └─────────────────────────────┘
                           │
                           ▼ ◄──────────────┐
              ┌─────────────────────────────┐  S14
              │ HAS THE PRESCRIBED TIME ELAPSED? │── NO
              └─────────────────────────────┘
                           │ YES
                           ▼
              ┌─────────────────────────────┐  S15
              │    EXTINGUISH BUTTON LIGHT   │
              └─────────────────────────────┘
                           │
                           ▼
              ┌─────────────────────────────┐  S16
              │        LOCK TRAY AGAIN       │
              └─────────────────────────────┘
                           │
                           ▼
              ┌─────────────────────────────┐  S17
              │       MOBILE BATTERY         │
              │   PULLED OUT FROM TRAY?      │──── YES
              └─────────────────────────────┘
                           │ NO
                           ▼
              ┌─────────────────────────────┐  S18
              │       RESUME POWER SOURCE    │
              │    SUPPLY TO MOBILE BATTERY  │
              └─────────────────────────────┘
                           │
                           ▼ ◄──────────────┐
              ┌─────────────────────────────┐  S19
              │       TURN ON SWITCH OF      │
              │        MOBILE BATTERY?       │──── NO
              └─────────────────────────────┘
                           │ YES
                           ▼
              ┌─────────────────────────────┐  S20
              │         TURN ON SWITCH       │
              └─────────────────────────────┘
                           │
                           ▼ ◄──────────────┘
                        (  END  )
```

# FIG. 11

# FIG. 12

INTEGRATED POWER MANAGER 30 ← - → PORTABLE DEVICE 32

10

20

77

70 FIRST BREAKER

74 FIRST INVERTER

72 SECOND BREAKER

76 SECOND INVERTER

COMMUNICATION SECTION 124

INTEGRATED CONTROL SECTION 78

RELAY CONTROL SECTION 80

TRAY CONTROL SECTION 82

36

44a SW1 44b SW2 44c SW3 44d SW4

LED1 LED2 LED3 LED4

46a LED1 LED2 LED3 LED4

46b 46c 46d

48a 48b 48c 48d

122

106 108

110 112

114 116 86 102

12c(12) 40c(40) 50

104 12d(12) 40d(40) 50

84

118 88 120

90 94

92

96 100

98 50

174 170 176

40a(40) 12a(12)

174 172 176

40b(40) 12b(12)

ELECTRIC POWER DEVICE

EP 4 307 507 A1

FIG. 13

ELECTRIC POWER DEVICE

## INTERNATIONAL SEARCH REPORT

International application No.

**PCT/JP2022/010257**

### A. CLASSIFICATION OF SUBJECT MATTER

*H02H 7/18*(2006.01)i; *H02J 7/00*(2006.01)i; *H02J 7/02*(2016.01)i
FI:  H02J7/00 302C; H02H7/18; H02J7/02 H; H02J7/02 J

According to International Patent Classification (IPC) or to both national classification and IPC

### B. FIELDS SEARCHED

Minimum documentation searched (classification system followed by classification symbols)

H02H7/18; H02J7/00; H02J7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2019/0157880 A1 (DELTA ELECTRONICS, INC.) 23 May 2019 (2019-05-23) | 1, 12-14, 16-17 |
| | paragraphs [0043]-[0067], fig. 7-8 | |
| Y | | 15 |
| A | | 2-11, 18 |
| Y | JP 2016-100920 A (DENSO CORP) 30 May 2016 (2016-05-30) | 15 |
| | paragraphs [0053]-[0064], fig. 4 | |
| A | WO 2018/225416 A1 (PANASONIC IP MAN CO LTD) 13 December 2018 (2018-12-13) | 1-18 |
| | paragraphs [0010]-[0052], fig. 1-2 | |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/010257**

| Patent document cited in search report | | | Publication date (day/month/year) | Patent family member(s) | | | Publication date (day/month/year) |
|---|---|---|---|---|---|---|---|
| US | 2019/0157880 | A1 | 23 May 2019 | CN | 109830764 | A | |
| JP | 2016-100920 | A | 30 May 2016 | (Family: none) | | | |
| WO | 2018/225416 | A1 | 13 December 2018 | US | 2020/0161875 | A1 | |
| | | | | paragraphs [0013]-[0055], fig. 1-2 | | | |
| | | | | CN | 110710075 | A | |

Form PCT/ISA/210 (patent family annex) (January 2015)

**EP 4 307 507 A1**

REFERENCES CITED IN THE DESCRIPTION

**Patent documents cited in the description**

- WO 2020027202 A1